# EUROPÄISCHE PATENTSCHRIFT

(11) **EP 4 163 708 B1**
(45) Veröffentlichungstag und Bekanntmachung des Hinweises auf die Patenterteilung: **10.12.2025**
(21) Anmeldenummer: 22195806.9
(22) Anmeldetag: 15.09.2022
(51) Int. Cl.: G02C 13/00, B08B 3/02, B08B 1/20, B08B 1/34

(54) **REINIGUNGSMASCHINE UND VERFAHREN ZUM REINIGEN VON LINSEN**
CLEANING MACHINE AND METHOD FOR CLEANING LENSES
MACHINE DE NETTOYAGE ET PROCÉDÉ DE NETTOYAGE DE LENTILLES

(30) Priorität: 17.09.2021 DE 102021124091
(43) Veröffentlichungstag der Anmeldung: 12.04.2023
(73) Patentinhaber: Schneider GmbH & Co. KG, 35112 Fronhausen (DE)
(72) Erfinder: HOFMANN, Klaus, 61273 Wehrheim (DE)
(74) Vertreter: Von Rohr Patentanwälte Partnerschaft mbB

(56) Entgegenhaltungen:
- EP-A1- 3 290 996
- CN-A- 110 125 122
- CN-A- 112 427 361
- CN-B- 106 405 876
- DE-T2- 60 208 470

## Beschreibung

Die vorliegende Erfindung betrifft eine Reinigungsmaschine zum Reinigen einer Linse gemäß dem Oberbegriff des Anspruchs 1 und ein Verfahren zum Reinigen einer Linse gemäß dem Oberbegriff des Anspruchs 12.

Unter dem Begriff "Reinigen" bzw. "Reinigung" im Sinne der vorliegenden Erfindung ist insbesondere eine Reinigung durch mechanische Behandlung mit einem Reinigungsorgan, wie einer Bürste, ein mechanisches und/oder chemisches Reinigen durch Verwendung eines Reinigungsmittels, beispielsweise durch Strahlen, Spülen oder Tauchen, und/oder ein Reinigen durch Beaufschlagen mit einem Luft- oder Gasstrom, beispielsweise durch ein Gebläse und/oder zum Trocknen, zu verstehen.

Die Reinigung der Linse kann ein oder mehrere, insbesondere zeitlich voneinander getrennte Reinigungsvorgänge umfassen.

Ein Reinigungsvorgang im Sinne der vorliegenden Erfindung ist vorzugsweise ein insbesondere zeitlich definierter Vorgang, bei dem ein Reinigen mittels der Reinigungsstation erfolgt, insbesondere durch mechanische Behandlung mit einem Reinigungsorgan, durch Flüssigkeitseinwirkung und/oder durch Beaufschlagung mit einem Luft- bzw. Gasstrom.

Die EP 3 290 996 A1 offenbart eine Vorrichtung und ein Verfahren zum Reinigen einer Linse, wobei die Linse bzw. der Träger mit der Linse mittels einer gemeinsamen Handhabungseinrichtung mehreren Reinigungseinrichtungen wahlweise zuführbar und beim Reinigen individuell bzw. linsenspezifisch bewegbar ist. Die Linse wird von oben bzw. in vertikaler Richtung der Reinigungseinrichtung zugeführt, kann während eines Reinigungsschritts oszillierend oder kreisend bewegt werden und wird wieder nach oben aus der Reinigungseinrichtung herausbewegt.

Die DE 103 53 553 A1 offenbart eine Anlage und ein Verfahren zum Abblocken von Brillengläsern, also Linsen für Brillen, wobei die Linsen nach dem Trennen von einem Blockstück mittels einer bandartigen Fördereinrichtung kontinuierlich nacheinander durch mehrere Reinigungseinrichtungen geführt bzw. gefördert werden. Die Reinigungseinrichtungen weisen getrennte Behälter und Prozessräume auf. Eine Reinigung kann durch Bürsten, Absprühen und Tauchen der Linsen erfolgen. Die Linsen werden vorzugsweise auf gitterartigen Trägern klemmend gehalten. Die Anlage ist relativ groß und gestattet keine optimale Reinigung.

Die DE 602 08 470 T2 betrifft eine Reinigungsmaschine für Brillengläser. Die Maschine setzt sich zusammen aus einem Förderer mit einer Tragfläche von zu reinigenden Brillengläsern, die sich in einer horizontalen Ebene befindet, und aus einem Waschtunnel, der durch eine Folge von Waschstationen gebildet ist, wobei der Tunnel vom Förderer und Steuer- und Schaltmitteln der Maschine durchquert wird. Die Waschstationen umfassen motorisierte Drehwaschbürsten. Die Tragfläche wird von zwei endlosen Ketten beweglich gemacht.

Der vorliegenden Erfindung liegt die Aufgabe zugrunde, eine verbesserte Reinigungsmaschine und ein verbessertes Verfahren zum Reinigen einer Linse anzugeben, vorzugsweise wobei eine intensive bzw. gründliche Reinigung mit einem hohen Durchsatz und/oder eine einfache und/oder kompakte Bauweise der Reinigungsmaschine ermöglicht oder unterstützt wird.

Die der Erfindung zugrunde liegende Aufgabe wird durch eine Reinigungsmaschine gemäß Anspruch 1 oder durch ein Verfahren gemäß Anspruch 12 gelöst. Vorteilhafte Weiterbildungen sind Gegenstand der Unteransprüche.

Die vorschlagsgemäße Reinigungsmaschine weist mindestens eine Reinigungsstation zum Reinigen einer Linse und eine Fördereinrichtung zur Förderung der Linse bzw. eines Trägers mit der Linse auf.

Die Fördereinrichtung ist vorzugsweise dazu ausgebildet, die Linse in einer Förderrichtung durch die Reinigungsstationen hindurch zu fördern bzw. die Linse von einer Seite der jeweiligen Reinigungsstation zuzufördern und von der anderen Seite aus der Reinigungsstation herauszufördern.

Ein erster Aspekt der vorliegenden Erfindung liegt darin, dass die Fördereinrichtung zur Förderung der Linse durch mehrere Reinigungsstationen nacheinander und zur Hin- und Herbewegung der Linse während eines bzw. jedes Reinigungsvorgangs simultan in den Reinigungsstationen ausgebildet ist. Dies ermöglicht eine optimierte Reinigung bei einfachem Aufbau.

Ein vorschlagsgemäßes Verfahren zur Reinigung einer Linse zeichnet sich gemäß dem ersten Aspekt dadurch aus, dass die Linse mittels der Fördereinrichtung durch die Reinigungsstation(en) hindurch gefördert wird und während des Reinigungsvorgangs in der Reinigungsstation bzw. gleichzeitig in den mehreren Reinigungsstationen, also temporär, insbesondere mittels der Fördereinrichtung, hin- und herbewegt wird. Insbesondere wird die Linse während des Reinigungsvorgangs bzw. während der Reinigung mittels der Fördereinrichtung vorzugsweise mehrfach, insbesondere mindestens zwei- oder dreimal, hin- und herbewegt, insbesondere abwechselnd in die Förderrichtung und entgegen der Förderrichtung bewegt.

Erfindungsgemäß ist die Fördereinrichtung als Endlosförderer ausgebildet und fördert die Linse durch mehrere Reinigungsstationen. Die Linse wird vorzugsweise parallel zur Förderrichtung während des Reinigungsvorgangs in der jeweiligen Reinigungsstation hin- und herbewegt bzw. oszilliert.

So wird auf einfache Weise eine optimierte Reinigung der Linse ermöglicht, da die Hin- und Herbewegung bzw. Oszillation zu einer Bewegung der Linse relativ zu einem Reinigungsorgan, insbesondere einer Bürste, einer Düse oder einem Gebläse, führt, wodurch die Reinigungswirkung über die Flächenerstreckung der Linse insgesamt verbessert werden kann. Auf diese Weise wird eine besonders gründliche bzw. intensive Reinigung der Linse ermöglicht.

Insbesondere wird durch die Fördereinrichtung eine zentrale und einfache Steuerung der zu reinigenden Linsen gleichzeitig in den verschiedenen Reinigungsstationen erreicht. So wird bei einem sehr einfachen Aufbau ein optimierte Reinigung in den verschiedenen Reinigungsstationen ermöglicht.

Es ist vorzugsweise vorgesehen, dass die Fördergeschwindigkeit durch die Reinigungsstation(en) zentral mittels der Fördereinrichtung variierbar ist.

Vorzugsweise wird die Linse mittels der Fördereinrichtung nicht kontinuierlich, sondern diskontinuierlich, bei unterschiedlichen Fördergeschwindigkeiten, schrittweise bzw. taktweise gefördert, insbesondere in Abhängigkeit von der Beladung der Fördereinrichtung, der Durchführung des Reinigungsvorgangs und/oder der Entladung der Fördereinrichtung.

Ein weiterer, auch unabhängig realisierbarer Aspekt der vorliegenden Erfindung liegt daher darin, dass die Fördereinrichtung vorzugsweise als Endlosförderer oder Linearförderer zur Förderung der Linse nacheinander durch mehrere Reinigungsstationen ausgebildet ist, wobei eine taktweise Förderung bzw. Förderung mit variierender Fördergeschwindigkeit erfolgt. Dies gestattet bei einfachem Aufbau eine ebenfalls optimierte Reinigung mit hohem Durchsatz.

Ein anderer, auch unabhängig realisierbarer Aspekt der vorliegenden Erfindung liegt darin, dass die Reinigungsstation eine insbesondere horizontal und/oder mittig unterteilte, vorzugsweise zweigeteilte, Reinigungskammer aufweist, wobei die Reinigungskammer insbesondere oben einen Reinigungsbereich zum Reinigen der Linse mit einem Reinigungsmittel und insbesondere unten bzw. unmittelbar unterhalb des Reinigungsbereichs einen Sammelbereich für das (verwendete) Reinigungsmittel aufweist. Der Sammelbereich bildet vorzugsweise ein Auffangbecken und/oder ein Reservoir für das Reinigungsmittel. Diese Anordnung ermöglicht eine besonders einfache und kompakte Bauweise der Reinigungsstation, da beispielsweise kein separater Tank für das Reinigungsmittel erforderlich ist.

Es ist vorgesehen, dass die Reinigungsstation einen Zwischenboden aufweist, vorzugsweise wobei der Zwischenboden die Reinigungskammer insbesondere horizontal und/oder mittig unterteilt, besonders bevorzugt in den Reinigungsbereich und den Sammelbereich.

Der Zwischenboden kann die Linse auffangen, falls sie bei der Reinigung von der Fördereinrichtung bzw. einem Träger herunterfallen sollte. Darüber hinaus kann der Zwischenboden verhindern oder minimieren, dass Partikel bzw. Fremdkörper in den Sammelbereich gelangen.

Die Fördereinrichtung ist insbesondere zum Transport bzw. Fördern der Linse bzw. eines Trägers mit der Linse in einer insbesondere horizontalen Förderrichtung ausgebildet, vorzugsweise von einer Aufgabestelle bzw. einer Beladestation der Reinigungsmaschine zu einer Abgabestelle bzw. einer Entladestation der Reinigungsmaschine. Die Fördereinrichtung weist vorzugsweise ein Obertrum zur Zuführung der Linse bzw. eines Trägers mit der Linse durch eine oder mehrere Reinigungsstationen zu der Abgabestelle bzw. der Entladestation und ein Untertrum zur Rückförderung des (leeren) Trägers zu der Aufgabestelle bzw. Beladestation auf.

Die Fördereinrichtung ist vorzugsweise als Linearförderer bzw. Endlosförderer, insbesondere Kettenförderer, ausgebildet und vorzugsweise mit mehreren Trägern zur Halterung der Linse bzw. mehreren Linsen zur Reinigung versehen. Insbesondere sind die Träger mit einem Umlaufmittel, wie einem umlaufenden Kettenstrang, gekoppelt. Jedoch können diese grundsätzlich auch davon lösbar sein.

Unter dem Begriff "Obertrum" ist vorzugsweise derjenige Teil der Fördereinrichtung zu verstehen, der eine Förderung der Linse von der Aufgabestelle bzw. der Beladestation durch eine oder mehrere Reinigungsstationen zu der Abgabestelle bzw. der Entladestation bewirkt. Vorzugsweise wird die Linse in bzw. auf dem Obertrum in Förderrichtung gefördert.

Unter dem Begriff "Untertrum" ist vorzugsweise derjenige Teil der Fördereinrichtung zu verstehen, der eine Rückförderung der (leeren) Träger von der Abgabestelle bzw. Entladestation zu der Aufgabestelle bzw. der Beladestation in eine Rückförderrichtung bewirkt.

Das Obertrum und das Untertrum der Fördereinrichtung bilden somit einen Kreislauf.

Die Fördereinrichtung, insbesondere das Obertrum der Fördereinrichtung, verläuft bzw. erstreckt sich vorzugsweise horizontal durch die Reinigungsmaschine, insbesondere den Reinigungsbereich, hindurch.

Vorzugsweise verläuft bzw. erstreckt sich die Fördereinrichtung, insbesondere ein Untertrum der Fördereinrichtung, horizontal unterhalb der Reinigungsmaschine bzw. Reinigungsstation(en), insbesondere unterhalb des Sammelbereichs, und/oder außerhalb der Reinigungsstation(en). Es ist jedoch grundsätzlich auch möglich, dass sowohl das Obertrum als auch das Untertrum der Fördereinrichtung horizontal durch den Reinigungsbereich verlaufen.

Die Reinigungsstation weist vorzugsweise im Reinigungsbereich eine oder mehrere Reinigungsorgane, insbesondere drehbar oder schwenkbar angetriebene Bürsten zum Reinigen der Linse, eine oder mehrere Düsen zum Aufbringen des Reinigungsmittels und/oder ein oder mehrere Gebläse zum Trocknen der Linse auf.

Die Reinigungsstation weist im Sammelbereich vorzugsweise eine Heizeinrichtung, einen Temperatursensor und/oder einen Füllstandsensor auf, insbesondere derart, dass eine vorbestimmte Menge des Reinigungsmittels insbesondere in einem vorbestimmten Temperaturbereich im Sammelbereich vorgehalten werden kann.

Es ist bevorzugt, dass die Reinigungsstation eine Filtereinrichtung zur Aufbereitung des Reinigungsmittels und/oder eine Pumpe zur Förderung des Reinigungsmittels vom Sammelbereich in den Reinigungsbereich aufweist.

Vorzugsweise ist die Reinigungsstation dazu ausgebildet, das (verwendete) Reinigungsmittel aus dem Sammelbereich aufzubereiten, insbesondere zu filtrieren, besonders bevorzugt mittels der Filtereinrichtung, und das (aufbereitete) Reinigungsmittel dem Reinigungsbereich insbesondere mittels der Pumpe und der Düsen direkt zuzuführen, insbesondere also ohne Verwendung eines (weiteren) Reservoirs, Tanks, Behälters o.dgl. Dies ist einem einfachen, kompakten Aufbau zuträglich.

Die Linse wird vorzugsweise mittels einer Handhabungseinrichtung von einem Transportband bzw. einem Transportträger, wie einer Transportkiste, aufgenommen, optional mittels einer Vorpositioniereinheit ausgerichtet und mittels der Handhabungseinrichtung der Fördereinrichtung, insbesondere einem Träger der Fördereinrichtung, übergeben, insbesondere in einer Beladestation bzw. der Aufgabestelle der Reinigungsmaschine.

Die Linse wird vorzugsweise anschließend von der Beladestation bzw. Aufgabestelle mittels der Fördereinrichtung in die Reinigungsstation, insbesondere den Reinigungsbereich, gefördert. Hier kann die Fördergeschwindigkeit bei Eintritt der Linse in die Reinigungsstation bzw. in den Reinigungsbereich und/oder vor Beginn des Reinigungsvorgangs variiert bzw. verringert werden.

Im Reinigungsbereich wird die Linse hin- und herbewegt bzw. durch die Fördereinrichtung horizontal bzw. parallel zu der Förderrichtung oszilliert, insbesondere wenn sich die Linse zunächst in einer (vordefinierten) Ausgangs- bzw. Reinigungsposition befindet.

Nach Abschluss des Reinigungsvorgangs wird die Linse vorzugsweise mittels der Fördereinrichtung aus der Reinigungsstation gefördert, insbesondere in Förderrichtung, und optional einer weiteren Reinigungsstation sowie schließlich der Entladestation bzw. der Abgabestelle zugeführt.

Nach der Reinigung wird die Linse vorzugsweise mittels einer Handhabungseinrichtung von der Fördereinrichtung, insbesondere einem Träger der Fördereinrichtung, gelöst und wieder dem Transportband bzw. Transportträger übergeben.

Vorzugsweise steht die Fördereinrichtung beim Be- und/oder Entladen der Fördereinrichtung (temporär) still.

Die vorgenannten Aspekte, Merkmale und Verfahrensschritte der vorliegenden Erfindung sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Figuren. Es zeigt:
- Fig. 1: eine perspektivische Ansicht der vorschlagsgemäßen Reinigungsmaschine;
- Fig. 2A: eine schematische Vorderansicht der Reinigungsmaschine mit geöffneten Reinigungsstationen;
- Fig. 2B: eine ausschnittweise, vergrößerte Vergrößerung von Fig. 2A;
- Fig. 3: eine perspektivische Ansicht der Reinigungsmaschine von vorne;
- Fig. 4: eine perspektivische Ansicht der Reinigungsmaschine von hinten;
- Fig. 5: eine perspektivische Ansicht einer Handhabungseinrichtung der Reinigungsmaschine zur Beladung der Reinigungsmaschine;
- Fig. 6: eine perspektivische Ansicht einer Vorpositioniereinheit der Reinigungsmaschine;
- Fig. 7: eine perspektivische Ansicht einer Fördereinrichtung mit Trägern der Reinigungsmaschine;
- Fig. 8A: eine schematische Draufsicht eines Trägers mit zugeordneten Aktuatoren;
- Fig. 8B: eine perspektivische Ansicht eines Trägers;
- Fig. 9: eine perspektivische Ansicht einer Handhabungseinrichtung der Reinigungsmaschine zur Entladung der Reinigungsmaschine; und
- Fig. 10: eine schematische Darstellung der Linse während eines Reinigungsvorgangs.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften und Vorteile erreicht werden, auch wenn von einer wiederholten Beschreibung abgesehen wird.

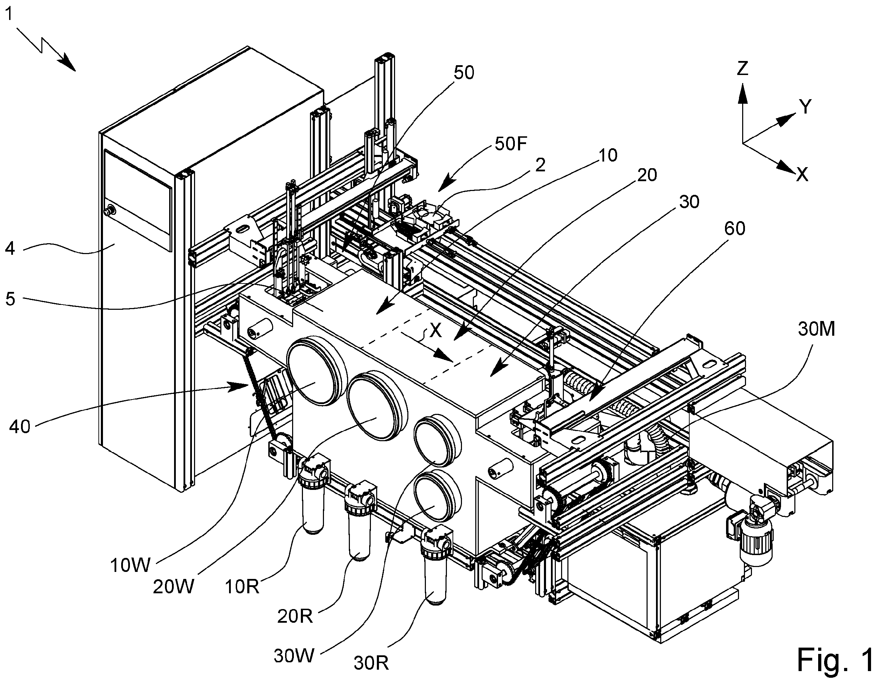

Fig. 1 zeigt eine perspektivische Ansicht einer vorschlagsgemäßen Reinigungsmaschine 1, wobei die Maschine ohne Außengehäuse dargestellt ist.

Die Reinigungsmaschine 1 ist zum Reinigen einer Linse 2, insbesondere zur gleichzeitigen Reinigung mehrerer Linsen 2, ausgebildet.

Bei der Linse 2 handelt es sich vorzugsweise um ein Brillenglas, also eine Linse für eine Brille. Dementsprechend werden mittels der Reinigungsmaschine 1 die Linsen 2 vorzugsweise paarweise gereinigt. Insbesondere ist es möglich, dass gleichzeitig mehrere Linsenpaare mittels der Reinigungsmaschine 1 gereinigt werden.

Im Folgenden wird die vorschlagsgemäße Reinigungsmaschine 1 bzw. das vorschlagsgemäße Verfahren primär im Zusammenhang mit der Reinigung einer Linse 2 erläutert, auch wenn die Reinigungsmaschine 1 mehrere Linsen 2, insbesondere ein Linsenpaar oder mehrere Linsenpaare, vorzugsweise gleichzeitig reinigt bzw. reinigen kann. Insbesondere ist die Reinigungsmaschine 1 dazu ausgebildet, mehrere Linsen 2, insbesondere mehrere Linsenpaare, nacheinander oder gleichzeitig zu reinigen, wie im Folgenden noch näher erläutert wird.

Die Linse 2 besteht vorzugsweise aus Kunststoff. Es ist jedoch auch möglich, dass die Linse 2 aus einem anderen Material, wie Glas, besteht.

Die Linse 2 weist vorzugsweise einen Durchmesser von mehreren Zentimetern, insbesondere von mehr als 3 cm, auf.

Die Reinigungsmaschine 1 weist vorzugsweise mindestens eine, beim Darstellungsbeispiel insbesondere drei bzw. vier Reinigungsstationen 10/20/30, eine Fördereinrichtung 40, eine Beladestation 50 und/oder eine Entladestation 60 auf.

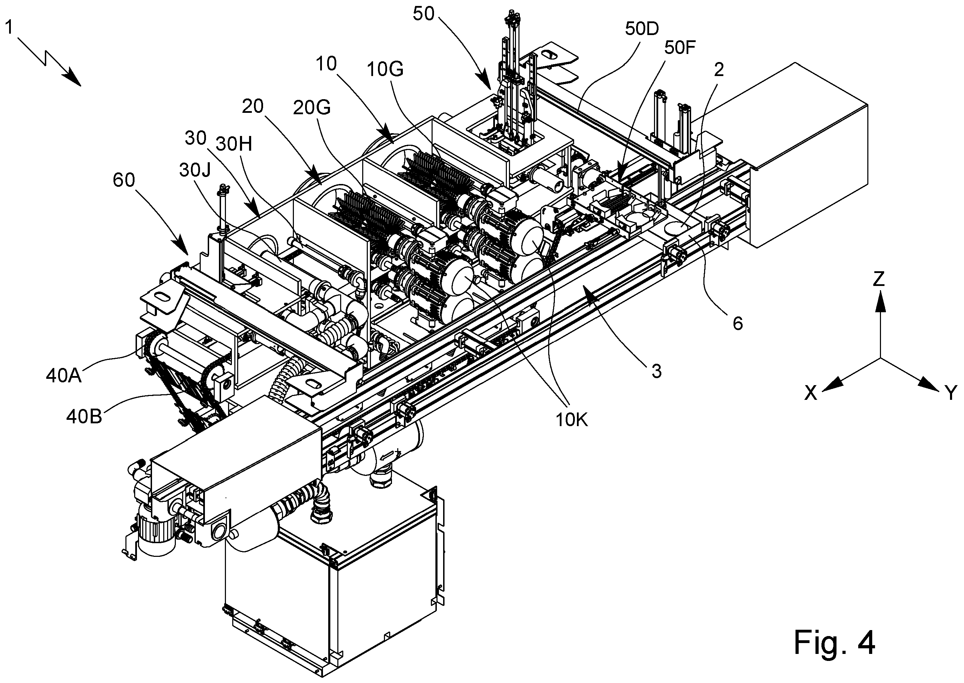

Optional ist die Reinigungsmaschine 1 mit einem Transportband 3 ausgestattet, um die Linse 2 beispielsweise nach einer vorherigen Bearbeitung, wie einer formgebenden Bearbeitung (beispielsweise durch Fräsen oder Drehen), einem Polieren oder einem Beschichten, der Reinigungsmaschine 1 zuzuführen und/oder die Linse 2 nach der Reinigung wegzuführen. Insbesondere erfolgt die Förderung auf dem Transportband 3 mittels eines Transportträgers bzw. einer Transportkiste 6 o. dgl., wie in Fig. 4 angedeutet.

Die Reinigungsmaschine 1 arbeitet vorzugsweise teil- oder vollautomatisch und weist vorzugsweise eine Steuereinrichtung 4 auf, die gemäß Fig. 1 insbesondere an einer Seite der Reinigungsmaschine 1 angeordnet ist.

Die Reinigungsmaschine 1 weist mehrere Reinigungsstationen 10/20/30 auf, wobei die Reinigungsstationen 10/20/30 vorzugsweise unmittelbar nebeneinander bzw. in einer Förderrichtung X hintereinander angeordnet sind.

Die Reinigungsstationen 10/20/30 dienen vorzugsweise unterschiedlichen Reinigungen und/oder weisen unterschiedliche Reinigungsorgane bzw. Konfigurationen von Reinigungsorganen auf. Es ist jedoch auch möglich, dass die Reinigungsstationen 10/20/30 der gleichen Reinigung dienen bzw. gleichartig aufgebaut bzw. ausgebildet sind bzw. mit gleichen Reinigungsorganen bestückt sind.

Bei der dargestellten Ausführungsform weist die Reinigungsmaschine 1 insbesondere die drei Reinigungsstationen 10/20/30 auf, vorzugsweise wobei die erste Reinigungsstation 10 und die zweite Reinigungsstation 20 zumindest im Wesentlichen baugleich ausgebildet sind, aber mit unterschiedlichen Reinigungsmitteln arbeiten und die dritte Reinigungsstation 30 beispielsweise ohne Bürsten auskommt und wiederum mit einem anderen bzw. frischen Reinigungsmittel arbeitet, wie im Folgenden noch näher erläutert wird.

Einzelne oder mehrere Aspekte, Vorteile, Merkmale, Eigenschaften und Verfahrensschritte, die im Folgenden lediglich im Zusammenhang mit einer der Reinigungsstationen 10/20/30 beschrieben werden, sind vorzugsweise auch bei der bzw. den anderen Reinigungsstationen 10/20/30 vorgesehen, sodass entsprechende Ausführungen auch für die andere bzw. die anderen Reinigungsstationen 10/20/30 gelten, auch wenn von einer Wiederholung abgesehen wird.

Jede Reinigungsstation 10/20/30 weist vorzugsweise eine abgeschlossene Reinigungskammer 10A/20A/30A und/oder ein Gehäuse 5 auf, insbesondere wobei das Gehäuse 5 die Reinigungskammer 10A/20A/30A vorzugsweise zu allen Seiten begrenzt.

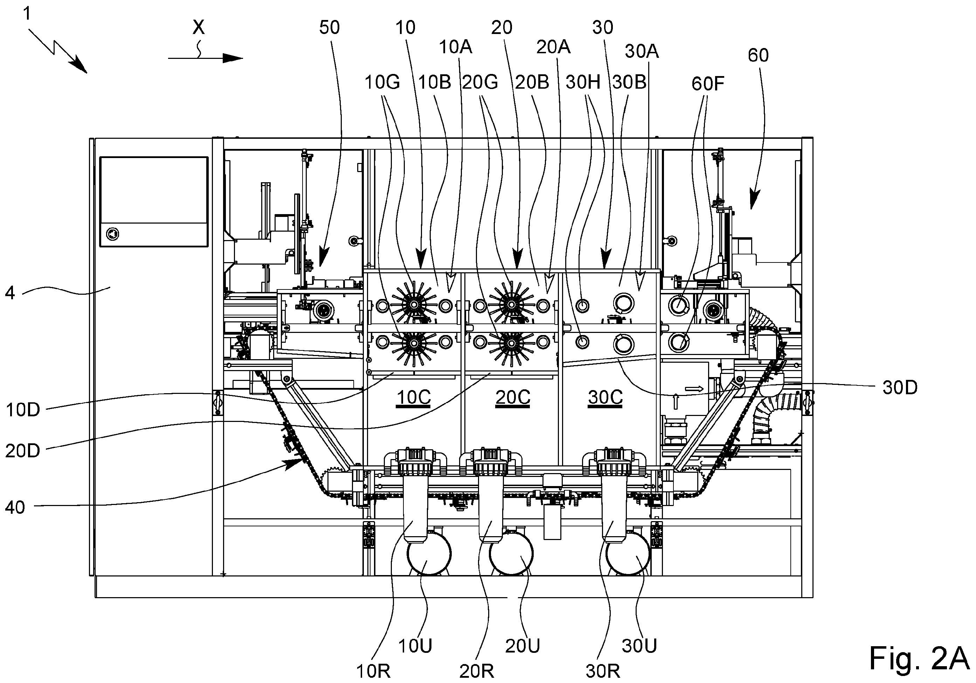

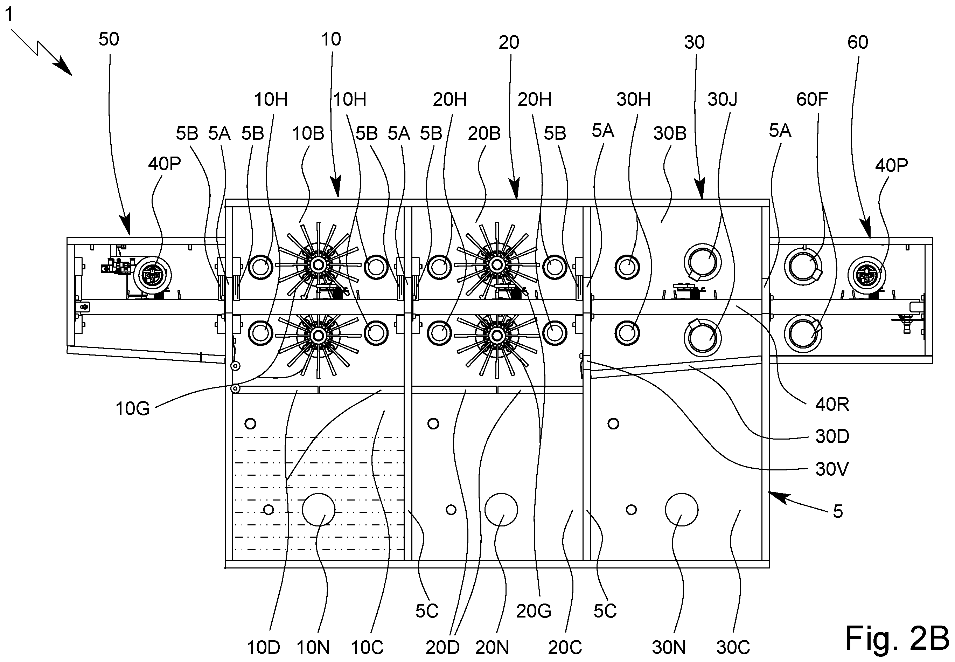

Es ist bevorzugt, dass die Reinigungsstationen 10/20/30 ein gemeinsames Gehäuse 5 aufweisen, auch wenn sie vorzugsweise unabhängig voneinander arbeiten bzw. Reinigungsmodule bilden und insbesondere durch Trennwände 5C des Gehäuses 5 voneinander getrennt sind, wie in Fig. 2A und 2B gezeigt wird. Auf diese Weise wird eine besonders kompakte Bauweise ermöglicht oder unterstützt. Jedoch sind auch andere konstruktive Lösungen möglich.

Fig. 2A zeigt eine schematische Vorderansicht der Reinigungsmaschine 1, wobei der vordere Teil des Gehäuses 5 zur Veranschaulichung nicht dargestellt ist.

Fig. 2B ist eine ausschnittsweise Vergrößerung von Fig. 2A zur Veranschaulichung des bevorzugten Aufbaus im Gehäuse 5.

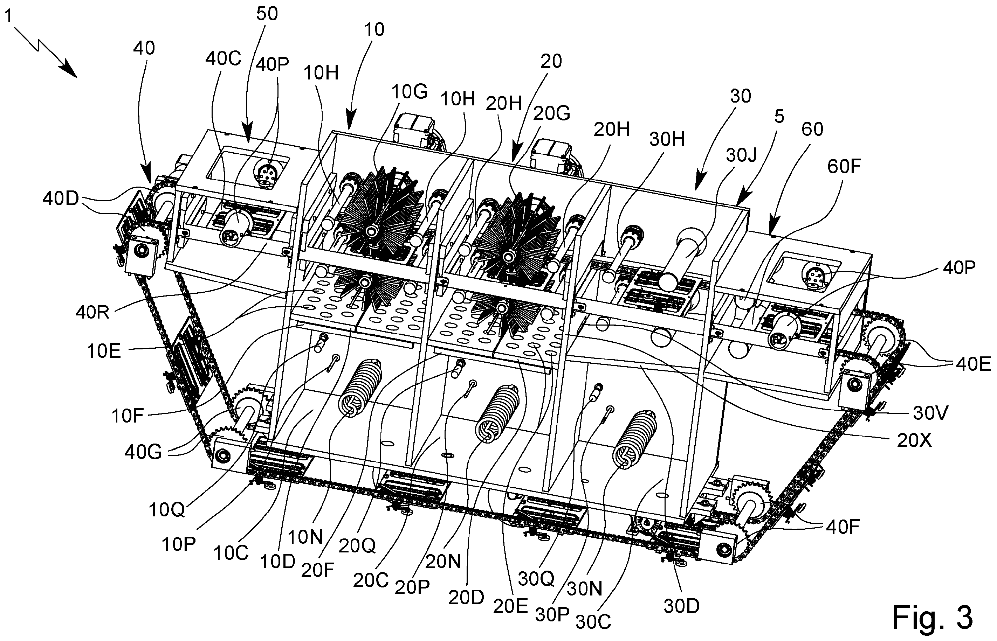

Fig. 3 zeigt eine vereinfachte perspektivische Ansicht der Reinigungsmaschine 1 von vorne. Insbesondere wurde der vordere Teil des Gehäuses 5 weggelassen.

Fig. 4 zeigt eine vereinfachte perspektivische Ansicht der Reinigungsmaschine 1 von hinten, wobei Teile des Gehäuses 5 nicht dargestellt sind.

Wie bereits erläutert, weist die Reinigungsmaschine 1 vorzugsweise ein Transportband 3 auf. Bei der dargestellten Ausführungsform verläuft das Transportband 3 zumindest im Wesentlichen parallel zu der Förderrichtung X, wie insbesondere Fig. 4 veranschaulicht. Hier sind jedoch auch andere Lösungen möglich.

Der Transport der Linsen 2 zu der Reinigungsmaschine 1 und von dieser weg erfolgt vorzugsweise mittels des optionalen Transportbands 3, wobei die Linsen 2 vorzugsweise in Transportträgern 6 transportiert werden, wie in Fig. 4 angedeutet.

Die Beladestation 50, die Reinigungsstationen 10/20/30 und die Entladestation 60 sind vorzugsweise in der Förderrichtung X hintereinander angeordnet, vorzugsweise wobei die Fördereinrichtung 40 durch die Beladestation 50, die Reinigungsstationen 10/20/30 und die Entladestation 60 verläuft und/oder die Linse 2 von der Beladestation 50 durch die Reinigungsstation(en) 10/20/30 zu der Entladestation 60 in Förderrichtung X förderbar ist.

Die Beladestation 50 ist dazu ausgebildet, die Fördereinrichtung 40 bzw. einen Träger 40C der Fördereinrichtung mit einer zu reinigenden Linse 2, vorzugsweise einem Paar von Linsen 2, zu beladen, insbesondere an einer Aufgabestelle und/oder unmittelbar vor der (ersten) Reinigungsstation 10.

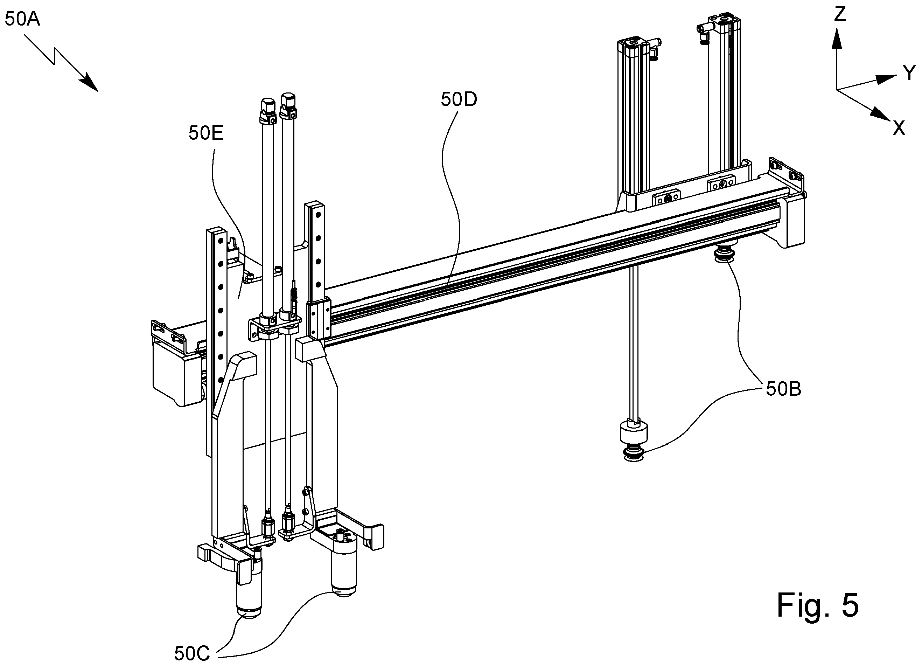

Die Beladestation 50 weist zu diesem Zweck eine Handhabungseinrichtung 50A auf, vorzugsweise wobei die Handhabungseinrichtung 50A dazu ausgebildet ist, die Linse 2 vom Transportband 3 bzw. Transportträger 6 zu nehmen, insbesondere anzusaugen, und der Fördereinrichtung 40 bzw. deren Träger 40C zu übergeben. Fig. 5 zeigt eine perspektivische Darstellung der Handhabungseinrichtung 50A.

Vorzugsweise weist die Handhabungseinrichtung 50A mindestens eine vorzugsweise pneumatische Greifeinrichtung für die Linse 2 auf, beim Darstellungsbeispiel eine erste Greifeinrichtung 50B und eine zweite Greifeinrichtung 50C.

Die Greifeinrichtungen 50B und 50C sind vorzugsweise derart ausgebildet, dass sie jeweils ein Paar von Linsen 2 handhaben bzw. manipulieren können. Dementsprechend weisen sowohl die erste Greifeinrichtung 50B als auch die zweite Greifeinrichtung 50C vorzugsweise jeweils zwei Greiforgane, insbesondere in Form von Saugern, zum Aufnehmen bzw. Halten von zu manipulierenden Linsen 2 auf, wie in Fig. 5 schematisch angedeutet.

Beim Darstellungsbeispiel sind die zwei Greiforgane der ersten Greifeinrichtung 50B vorzugsweise unabhängig voneinander in vertikaler Richtung (Z-Richtung) bewegbar bzw. verfahrbar. In Fig. 5 ist beispielhaft der rechte Sauger angehoben und der linke Sauger abgesenkt. Gleiches gilt vorzugsweise für die zweite Greifeinrichtung 50C. Jedoch ist es grundsätzlich auch möglich, dass die beiden Greiforgane einer Greifeinrichtung 50B bzw. 50C immer nur gemeinsam, hier in vertikaler Richtung bzw. Z-Richtung, bewegbar sind.

Beim Darstellungsbeispiel können die beiden Greifeinrichtungen 50B und 50C unabhängig voneinander arbeiten, werden jedoch vorzugsweise von der zentralen Steuereinrichtung 4 in gewünschter Weise gesteuert.

Die Bewegung erfolgt jeweils bevorzugt durch Pneumatikzylinder. Jedoch sind auch andere konstruktive Lösungen möglich.

Beim Darstellungsbeispiel ist die erste Greifeinrichtung 50B bzw. sind deren Greiforgane vorzugsweise nur vertikal bzw. in Z-Richtung bewegbar. Sie dienen insbesondere nur einem Anheben der Linse(n) 2 vom Transportträger 6 und sind dementsprechend vorzugsweise über dem Transportband 3 entsprechend positioniert. Jedoch sind auch andere konstruktive Lösungen möglich.

Vorzugsweise ist die zweite Greifeinrichtung 50C bzw. sind deren Greiforgane ebenfalls in vertikaler Richtung bzw. Z-Richtung, aber zusätzlich auch in Querrichtung, insbesondere in horizontaler Richtung und quer bzw. senkrecht zu der X-Richtung, hier also in Y-Richtung, bewegbar, um die Linse(n) 2 insbesondere nach einer Vorpositionierung entsprechend übernehmen und an die Fördereinrichtung 40 bzw. einen Träger 40C der Fördereinrichtung 40 an der Aufgabestelle vor der ersten Reinigungsstation 10 übergeben zu können.

Beim Darstellungsbeispiel ist die zweite Greifeinrichtung 50C längs einer Schiene 50D in Y-Richtung bzw. quer zur Förderrichtung X und/oder zum Transportband 3 verschiebbar, insbesondere mittels eines daran motorisch (insbesondere mittels eines Pneumatikzylinders) bewegbaren gemeinsamen Schlittens 50E, der seinerseits die vertikal bzw. in Z-Richtung verfahrbaren Greiforgane hält. Jedoch sind auch andere konstruktive Lösungen möglich.

Vorzugsweise ist die Handhabungseinrichtung 50A bzw. deren Schiene 50D oberhalb des Transportbandes 3 und/oder der Fördereinrichtung 40 angeordnet und/oder wird die Linse 2 von oben dem Transportband 3 bzw. Transportträger 6 entnommen und der Fördereinrichtung 40 bzw. Träger 40C von oben übergeben.

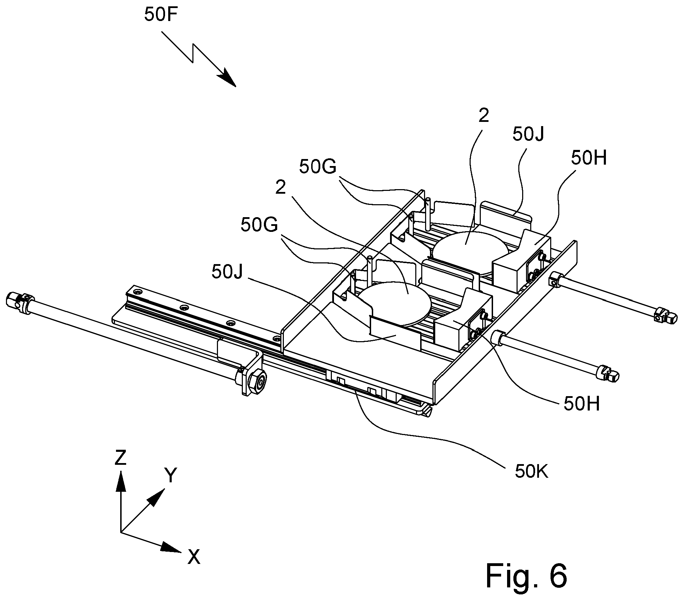

Vorzugsweise weist die Reinigungsmaschine 1 bzw. Beladestation 50 eine Vorpositioniereinheit 50F auf. Vorzugsweise ist die Vorpositioniereinheit 50F dazu ausgebildet, die Linse 2 für die Reinigung - insbesondere translatorisch bzw. in der Horizontalebene bzw. in X- und/oder Y-Richtung - auszurichten bzw. in Position zu bringen. Fig. 6 zeigt eine perspektivische Ansicht der Vorpositioniereinheit 50F.

Die Vorpositioniereinheit 50F ist vorzugsweise unmittelbar oberhalb des Transportbands 3 und/oder unterhalb der Schiene 50D angeordnet, wie insbesondere in Fig. 1 und 4 veranschaulicht. Hier sind jedoch auch andere Anordnungen möglich.

Die Handhabungseinrichtung 50A bzw. erste Greifeinrichtung 50B ist vorzugsweise dazu ausgebildet, die Linse(n) 2 vom Transportband 3 bzw. Transportträger 6 aufzunehmen und zunächst in die Vorpositioniereinheit 50F einzulegen. Nach erfolgter Ausrichtung der Linse(n) 2 in der Vorpositioniereinheit 50F erfolgt deren Aufnahme durch die Handhabungseinrichtung 50A bzw. zweite Greifeinrichtung 50C und Übergabe an die Fördereinrichtung 40 bzw. deren Träger 40C.

Die Vorpositioniereinheit 50F ist vorzugsweise ebenfalls zur gleichzeitigen Manipulation bzw. Vorpositionierung eines Linsenpaars ausgebildet. Nachfolgend wird ein bevorzugter Aufbau der Vorpositioniereinheit 50F kurz erläutert, wobei nur auf die Aufnahme und Ausrichtung einer Linse 2 näher eingegangen wird, die entsprechenden Komponenten vorzugsweise jedoch entsprechend paarweise vorhanden sind und dementsprechend gleichzeitig die Aufnahme und Vorpositionierung von zwei Linsen 2 erfolgen kann.

Die Vorpositioniereinheit 50F weist vorzugsweise eine Halterung 50G, eine Backe 50H und/oder eine Führung 50J auf, vorzugsweise wobei die Halterung 50G und die Backe 50H relativ zueinander verschiebbar sind, insbesondere um die Linse 2 zwischen der Halterung 50G und der Backe 50H auszurichten, wie in Fig. 6 veranschaulicht.

Bei der dargestellten Ausführungsform ist die Backe 50H zumindest im Wesentlichen V-förmig bzw. wie ein Schneepflug ausgebildet, insbesondere derart, dass die Linse 2 an zwei Anlagenflächen zur Anlage kommt.

Die Halterung 50G ist vorzugsweise durch zwei vertikal ausgerichtete Stifte gebildet, die insbesondere symmetrisch vor der Backe 50H bzw. zu einer Bewegungsachse der Backe 50H angeordnet sind.

Vorzugsweise ist die Backe 50H horizontal bzw. in X-Richtung bzw. parallel zur Förderrichtung X gegen die vorzugsweise feststehende Halterung 50G verschiebbar (vorzugsweise pneumatisch mittels eines Pneumatikzylinders), insbesondere derart, dass die Linse 2 zwischen der Backe 50H und der Halterung 50G - hier durch umfangsseitige Anlage - ausgerichtet wird.

Die Führung 50J ist vorzugsweise dazu ausgebildet, die Linse 2 seitlich zu führen und/oder ein seitliches Herausfallen der Linse 2 aus der Vorpositioniereinheit 50F zu verhindern. Bei der dargestellten Ausführungsform ist die Führung 50J durch seitliche Begrenzungen, vorzugsweise durch Bleche gebildet.

Die Vorpositioniereinheit 50F ist vorzugsweise horizontal bzw. in X-Richtung bzw. parallel zur Förderrichtung X verschiebbar.

Auf diese Weise bzw. vorzugsweise ist es möglich, dass die Vorpositioniereinheit 50F nach Entnahme der Linse(n) 2 vom Transportband 3 bzw. Transportträger 6 mittels der ersten Greifeinrichtung 50B unter diese bewegt wird, um die Linse(n) 2 dazu mittels der Greifeinrichtung 50B in die Vorpositioniereinheit 50F abzulegen.

Nach der Aufnahme und Ausrichtung kann die zweite Greifeinrichtung 50C die Linse(n) 2 aus der Vorpositioniereinheit 50F aufnehmen. Hierzu wird die Vorpositioniereinheit 50F beim Darstellungsbeispiel vorzugsweise zunächst unter der ersten Greifeinrichtung 50B wegbewegt, hier in X-Richtung bzw. entlang einer entsprechenden Schlittenführung 50K o. dgl. in eine Übergabeposition bewegt werden, die im Bewegungsbereich der zweiten Greifeinrichtung 50C liegt.

Das bevorzugte Aufnehmen der Linse(n) 2 von der Zuförderung bzw. dem Transportband 3 / Transportträger 6 und das anschließende Vorpositionieren, insbesondere mittels der separaten Vorpositioniereinheit 50F, die insbesondere nur eine lineare Positionierbewegung in einer Richtung benötigt, sowie das anschließende Übergeben der positionierten Linse(n) 2 an die Fördereinrichtung 40 bzw. deren Träger 40C ermöglicht einen besonders einfachen und kompakten Aufbau und stellt auch einen unabhängig realisierbaren Aspekt der vorliegenden Erfindung dar.

Die vorschlagsgemäße Vorpositionierung kann bedarfsweise auch bei sonstigen Bearbeitungen bzw. Bearbeitungseinrichtungen, wie für eine Beschichtung bzw. bei einer Beschichtungsanlage o. dgl. eingesetzt werden.

Alternativ kann die Vorpositionierung auch mittels entsprechender Greiforgane, wie Zentriergreifer, der ersten oder zweiten Greifeinrichtung 50B bzw. 50C - bedarfsweise also ohne Vorpositioniereinheit 50F - realisiert werden.

Alternativ oder zusätzlich kann die Vorpositionierung bzw. Ausrichtung der Linse(n) 2 statt durch die Vorpositioniereinheit 50F auch durch sonstige Einrichtungen, wie ein entsprechendes Greiforgan, eine gesteuerte Positionierung eines Greiforgans o. dgl. erfolgen.

Alternativ oder zusätzlich ist es auch möglich, dass dieselbe Greifeinrichtung 50B bzw. 50C sowohl die Vorpositioniereinheit 50F beschickt als auch nach der Vorpositionierung entlädt. Dies ermöglicht einen vereinfachten Aufbau der Handhabungseinrichtung 50A bzw. den Wegfall einer Greifeinrichtung 50B/50C. Anstelle von zwei Greifeinrichtungen 50B und 50C kann die Handhabungseinrichtung 50A entsprechende Manipulationen also ggf. nur mit einer Greifeinrichtung erledigen.

Die Handhabungseinrichtung 50A bzw. zweite Greifeinrichtung 50C weist als Greiforgan besonders bevorzugt einen Sauger auf, der sich an die Linsenoberfläche bzw. deren Neigung anpasst und in dieser Position beim Ansaugen arretiert, um ein unerwünschtes Verkippen der Linse 2 zu vermeiden. So kann erreicht werden, dass die mit ihrer Rückseite horizontal aufliegende Linse 2 auch mit dieser Ausrichtung angehoben und schließlich auf der Fördereinrichtung 40 bzw. deren Träger 40C abgelegt wird. Solche Sauger werden auch als Kalottensauger bezeichnet bzw. ausgeführt.

Die Vorpositioniereinheit 50F dient daher vorzugsweise auch einer horizontalen Ausrichtung der Linse(n) 2, damit diese mit der gewünschten horizontalen Ausrichtung auf dem Linsenträger 40C abgelegt werden kann bzw. können.

Die genannte horizontale Ausrichtung und Aufnahme bzw. Übergabe der Linse(n) 2 stellt ebenfalls einen besonderen, auch unabhängig realisierbaren Aspekt der vorliegenden Erfindung dar.

Bezüglich der Vorpositionierung ist noch anzumerken, dass durch die umfangsseitige Anlage an einen feststehenden Anschlag, hier an den zwei Stiften bzw. der Halterung 50G aufgrund unterschiedlicher Linsengrößen keine Zentrierung erfolgt, jedoch in dieser Richtung, hier in oder gegen X-Richtung eine Positionierung eines Linsenendes. Diese Art der Vorpositionierung bzw. Ausrichtung ist sehr einfach realisierbar und besonders vorteilhaft, insbesondere wenn eine anschließende Klemmung der Linse(n) 2 gegen einen seitlichen Anschlag - hier vorzugsweise auf dem Träger 40C der Fördereinrichtung 40 - erfolgt.

Die Klemmung erfolgt vorzugsweise in entsprechender Richtung wie die Vorpositionierung, beim Darstellungsbeispiel vorzugsweise gegen die X-Richtung. Auch dies stellt einen besonderen Aspekt der vorliegenden Erfindung dar, der auch unabhängig von der Reinigung auch bei einem sonstigen Bearbeiten, wie einem Beschichten oder in einer Beschichtungsanlage o. dgl., eingesetzt bzw. realisiert werden kann.

Aus der Übergabeposition kann dann die zweite Greifeinrichtung 50C die Linse(n) 2 aus der Vorpositioniereinheit 50F entnehmen und diese an die Fördereinrichtung 40 bzw. deren Träger 40C übergeben. Dies erfolgt jeweils vorzugsweise von oben. In Fig. 1, 4 und 5 ist die zweite Greifeinrichtung 50C in der Position zur Übergabe an die Fördereinrichtung 40 bzw. im Bereich der Aufgabestelle gezeigt.

Im Folgenden wird der bevorzugte Aufbau der Fördereinrichtung 40 und der Reinigungsstationen 10/20/30 insbesondere anhand der Fig. 2 bis 4 und 7 näher erläutert.

Die Fördereinrichtung 40 ist zur Förderung der Linse 2 durch die Reinigungsstationen 10/20/30 und/oder von der Beladestation 50 zur Entladestation 60 und/oder in Förderrichtung X ausgebildet.

Die Förderrichtung X der Fördereinrichtung 40 verläuft vorzugsweise horizontal, in der Darstellung gemäß Fig. 2A und 2B von links nach rechts.

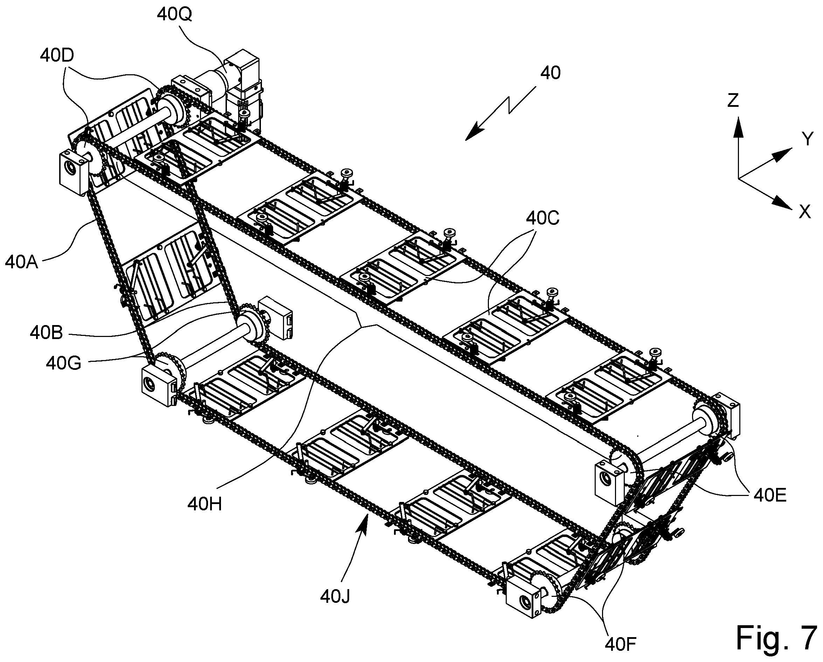

Fig. 7 zeigt die Fördereinrichtung 40 in einer perspektivischen Darstellung.

Wie insbesondere in Fig. 3 und 7 veranschaulicht, ist die Fördereinrichtung 40 als Endlosförderer, insbesondere als Kettenförderer ausgebildet, um die Linse(n) 2 durch die Reinigungsstationen 10/20/30 zu fördern. Vorzugsweise weist die Fördereinrichtung 40 mindestens einen umlaufenden Strang, bei der dargestellten Ausführungsform zwei umlaufende und parallel zueinander angeordnete Kettenstränge 40A und40B auf. Anstelle einer Kette kann beispielsweise auch ein Riemen verwendet werden.

Die Fördereinrichtung 40 ist vorzugsweise mit einer Vielzahl von Trägern 40C für die Linse 2 ausgestattet, vorzugsweise wobei die Träger 40C fest, insbesondere form-, kraft- und/oder stoffschlüssig, mit dem vorzugsweise umlaufenden Fördermittel bzw. Strang, hier Kettenstrang 40A/40B verbunden oder in sonstiger Weise gekoppelt sind.

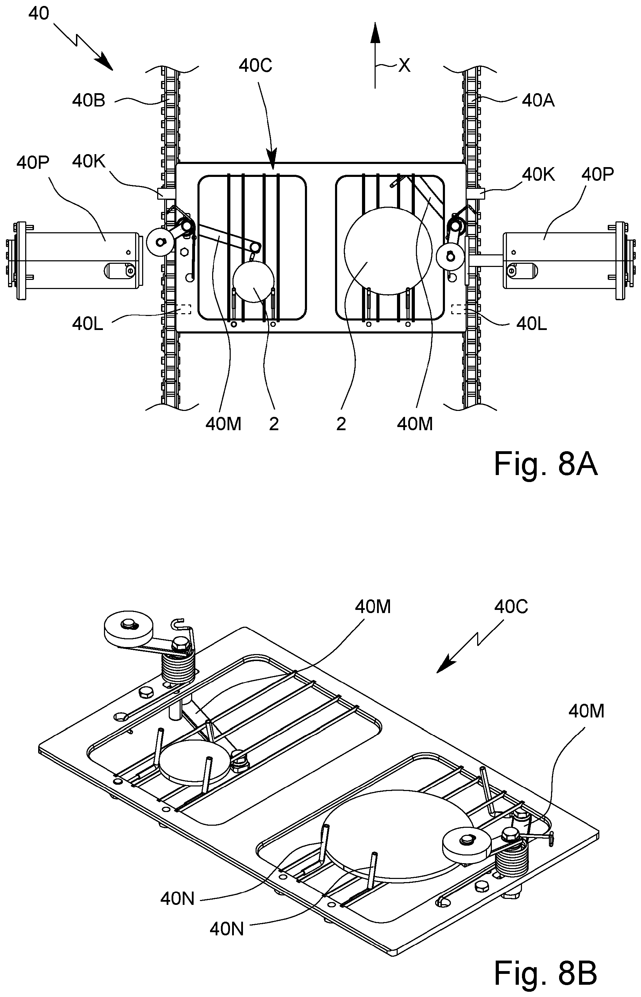

Fig. 8A zeigt schematisch einen Träger 40C mit Teilen der Kettenstränge 40A/40B.

Die Träger 40C sind vorzugsweise auf jeder Seite einmal mit einem Kettenstrang 40A bzw. 40B insbesondere gelenkig bzw. verschwenkbar gekoppelt bzw. verbunden (vgl. Kopplungen 40K in Fig. 8A), um den Kettensträngen 40A/40B bei den Umlenkungen folgen zu können, wobei die Kettenstränge 40A/40B vorzugsweise entsprechende Halteabschnitte 40L tragen, die die Träger 40C längs der Kettenstränge 40A/40B bzw. in horizontaler Ausrichtung halten, wenn die Träger 40C von der Aufgabestelle durch die Reinigungsstationen 10/20/30 zu der Entladestelle bzw. in horizontaler Richtung in Förderrichtung X bewegt werden. Jedoch sind auch andere konstruktive Lösungen möglich.

Nachfolgend wird ein bevorzugter Aufbau der Träger 40C anhand der perspektivischen Darstellung von Fig. 8B näher erläutert.

Die Träger 40C sind vorzugsweise gitterartig bzw. rostartig ausgebildet. Vorzugsweise weisen die Träger 40C jeweils einen Rahmen, Trägerstäbe und eine Halteeinrichtung auf.

Jeder Träger 40C ist insbesondere zur Abstützung bzw. Lagerung und/oder zur klemmenden Halterung der Linse 2 oder mehrerer Linsen 2, besonders bevorzugt eines Paares von Linsen 2 ausgebildet.

Die Halteeinrichtung des Trägers 40C ist vorzugsweise zur klemmenden Halterung einer Linse 2 ausgebildet.

Beim Darstellungsbeispiel umfasst die Halteeinrichtung einen federnd verschwenkbaren Schwenkarm 40M, der zur klemmenden Halterung umfangsseitig an die Linse 2 anlegbar ist und die Linse 2 vorzugsweise gegen zwei Haltestifte 40N drückt und dadurch die Linse 2 klemmend auf dem Träger 40C festlegt.

In Fig. 8A und 8B sind zwei Halteeinrichtungen dargestellt. Die Linse 2 auf der linken Seite wird klemmend gehalten, der Schwenkarm 40M liegt also mit einem Anlageabschnitt umfangsseitig an der Linse 2 an. Auf der rechten Seite ist die Halteeinrichtung bzw. der Schwenkarm 40M geöffnet. In diesem Zustand kann die Linse 2 auf dem Träger 40C abgelegt oder von dem Träger 40C aufgenommen werden.

Zum Öffnen der Halteeinrichtungen bzw. Schwenkarme 40M werden vorzugsweise Aktuatoren 40P eingesetzt, wie in Fig. 8A angedeutet. Diese sind im Bereich der Beladestation 50 bzw. Aufgabestelle und im Bereich der Entladestelle bzw. Entladestation 60 vorzugsweise auf gegenüberliegenden Seiten angeordnet, um die Halteeinrichtungen bzw. Schwenkarme 40M bedarfsweise zu öffnen.

Die Aktuatoren 40P wirken vorzugsweise quer zur Förderrichtung X und/oder in horizontaler Richtung bzw. Y-Richtung.

Der Aktuator 40P kann auf ein freies Ende des Schwenkarms 40M (insbesondere über eine am freien Ende angebrachte Rolle o. dgl.) derart einwirken, dass der Schwenkarm 40M in eine geöffnete bzw. von der Linse 2 abgerückte Lage verschwenkt wird, wie in Fig. 8A auf der rechten Seite angedeutet.

Auf der linken Seite ist der Aktuator 40P hingegen beim Darstellungsbeispiel eingefahren und wirkt nicht auf den Schwenkarm 40M ein, sodass die Linse 2 auf der linken Seite klemmend gehalten ist.

Normalerweise erfolgt das Öffnen der Halteeinrichtungen des jeweiligen Trägers 40C jedoch gleichzeitig, insbesondere von entgegengesetzten Seiten, und zwar einerseits an der Aufgabestelle zum Beladen des Trägers 40C und an der Entladestelle zum Entladen des Trägers 40C.

So wird ein schnelles und gleichzeitiges Entnehmen von zwei Linsen 2 beim Entladen bzw. gleichzeitiges Beschicken des Trägers 40C mit zwei Linsen 2 beim Beladen ermöglicht.

Die Fördereinrichtung 40 weist beim bevorzugten Ausführungsbeispiel, wie insbesondere in Fig. 7 dargestellt, vorzugsweise ein Antriebsrad 40D, ein Abtriebsrad 40E und/oder mehrere Umlenkräder 40F/40G auf, vorzugsweise wobei das Antriebsrad 40D über eine Welle mit einem Antrieb 40Q verbunden ist und/oder der Kettenstrang 40A/40B mittels der Umlenkräder 40F/40G wie gewünscht umgelenkt und/oder gespannt wird.

Der Antrieb 40Q ist beispielsweise als Schrittmotor ausgeführt und/oder gestattet vorzugsweise eine Variation bzw. Steuerung oder Regelung der Fördergeschwindigkeit, Umkehrung der Förderrichtung und/oder genaue bzw. gesteuerte Positionierung der Linse(n) 2.

Vorzugsweise weist die Fördereinrichtung 40 ein Obertrum 40H und ein Untertrum 40J auf.

Das Obertrum 40H erstreckt sich vorzugsweise in Förderrichtung X vom Antriebsrad 40D zum Abtriebsrad 40E. Das Untertrum 40J erstreckt sich vorzugsweise in Förderrichtung X vom Abtriebsrad 40E über die Umlenkräder 40F/40G zum Antriebsrad 40D.

Vorzugsweise verläuft die Fördereinrichtung 40, insbesondere das Obertrum 40H, zumindest im Wesentlichen horizontal durch die Reinigungsstationen 10/20/30, insbesondere von der Beladestation 50 durch die Reinigungsstationen 10/20/30 zu der Entladestation 60.

Vorzugsweise verläuft das Untertrum 40J außerhalb der Reinigungsstationen 10/20/30 bzw. des Gehäuses 5, insbesondere unterhalb der Reinigungsstationen 10/20/30 bzw. Sammelbereiche 10C/20C/30C. Es sind jedoch auch andere Lösungen möglich, bei denen das Untertrum 40J durch die Reinigungsstationen 10/20/30 verläuft.

Wie insbesondere Fig. 2A, 3 und 7 veranschaulichen, ist die Fördereinrichtung 40 in einer Seitenansicht bzw. quer zur Förderrichtung X zumindest im Wesentlichen trapezförmig, insbesondere in Form eines gleichschenkligen Trapezes, ausgebildet, vorzugsweise wobei das Untertrum 40J die kürzere Grundseite und/oder das Obertrum 40H die längere Grundseite bzw. die Basis des Trapezes bildet. Auf diese Weise wird die horizontale Förderstrecke für die Linse 2 maximiert bzw. ein kompakter Aufbau der Reinigungsmaschine 1 ermöglicht.

Im Folgenden wird der bevorzugte Aufbau der Reinigungsstationen 10/20/30 näher erläutert, insbesondere anhand der Fig. 2A, 2B und 3.

Zur Vereinfachung wird zunächst auf den bevorzugten Aufbau der ersten Reinigungsstation 10 näher eingegangen.

Wie bereits erläutert, weist die Reinigungsstation 10 eine Reinigungskammer 10A auf, vorzugsweise wobei die Reinigungskammer 10A zu allen Seiten weitestgehend verschlossen bzw. abgedichtet ist, insbesondere derart, dass ein Austritt von Reinigungsmittel, Partikeln o. dgl. verhindert oder minimiert wird.

Es ist vorgesehen, dass die Reinigungsstation 10 bzw. Reinigungskammer 10A vorzugsweise horizontal unterteilt, insbesondere zweigeteilt ist und/oder einen (oberen) Reinigungsbereich 10B und einen (unteren) Sammelbereich 10C aufweist.

Der Reinigungsbereich 10B ist für die Reinigung der Linse 2 vorgesehen, insbesondere mittels eines Reinigungsmittels. Der Sammelbereich 10C ist zum Sammeln bzw. Auffangen des Reinigungsmittels vorgesehen, wie in Fig. 2B gestrichelt im Sammelbereich 10C angedeutet.

Insbesondere dient der Sammelbereich 10C sowohl als Auffangbecken als auch als Reservoir für das Reinigungsmittel.

Das Reinigungsmittel ist vorzugsweise als Reinigungsflüssigkeit ausgebildet und kann einen Reiniger, ein Lösungsmittel und/oder Wasser, vorzugsweise deionisiertes bzw. vollentsalztes Wasser, aufweisen oder daraus bestehen.

Der Reinigungsbereich 10B ist vorzugsweise unmittelbar oberhalb des Sammelbereichs 10C angeordnet.

Vorzugsweise verläuft die Fördereinrichtung 40, insbesondere das Obertrum 40H, horizontal durch den Reinigungsbereich 10B hindurch. In Fig. 2A, 2B und 3 ist das Obertrum 40H durch eine seitliche Führungsschiene 40R verdeckt und daher nicht sichtbar.

Die Reinigungsstation 10 bzw. deren Reinigungsbereich 10B weist daher vorzugsweise einen Einlass und einen Auslass für die zu reinigende(n) Linse(n) 2 bzw. Förderrichtung 40 auf, die vorzugsweise durch seitliche, insbesondere schlitzartige Öffnungen 5A des Gehäuses 5 auf gegenüberliegenden Seiten gebildet sind (vgl. Fig. 2B).

Es ist bevorzugt, dass die Öffnungen 5A mit Bürsten bzw. einer Bürstendichtung 5B versehen und/oder auf sonstige Weise verschließbar sind, insbesondere um einen Austritt bzw. eine Verschleppung von Reinigungsmittel oder Verschmutzungen aus dem Reinigungsbereich 10B in benachbarte Bereiche oder Stationen zu verhindern oder zumindest zu minimieren.

Die Reinigungsstation 10 weist vorzugsweise eine Zwischenwand bzw. einen Zwischenboden 10D auf, vorzugsweise wobei der Zwischenboden 10D die Reinigungskammer 10A vorzugsweise zumindest im Wesentlichen mittig oder horizontal unterteilt bzw. den Reinigungsbereich 10B vom Sammelbereich 10C trennt.

Vorzugsweise weist der Zwischenboden 10D mindestens einen Durchlass 10E auf. Bei der dargestellten Ausführungsform ist der Zwischenboden 10D mit einer Vielzahl von Durchlässen 10E in Form von Bohrungen versehen.

Über die Durchlässe 10E kann das Reinigungsmittel vom Reinigungsbereich 10B in den Sammelbereich 10C fließen.

Der Zwischenboden 10D ist insbesondere zum Auffangen der Linse 2 ausgebildet, falls diese bei der Reinigung von der Fördereinrichtung 40 fallen sollte.

Alternativ kann der Zwischenboden 10D als Sieb ausgebildet oder zusätzlich mit einem Sieb versehen sein, insbesondere um (auch) Partikel bzw. Verschmutzungen herauszufiltern.

Der Zwischenboden 10D ist vorzugsweise herausnehmbar und/oder lösbar in der Reinigungskammer 10A befestigt bzw. eingelegt und wird beispielsweise von einer insbesondere leistenartigen Halterung 10F gehalten bzw. abgestützt, wie in Fig. 3 angedeutet.

Der Zwischenboden 10D ist vorzugsweise mehrteilig ausgebildet. Bei der dargestellten Ausführungsform weist der Zwischenboden 10D mehrere, hier zwei, Wandelemente auf, die nebeneinander angeordnet sind und/oder einzeln herausnehmbar sind.

Wie insbesondere in Fig. 1 veranschaulicht, weist die Reinigungsstation 10 vorzugsweise mindestens eine Wartungsöffnung 10W auf, vorzugsweise wobei die Reinigungskammer 10A über die Wartungsöffnung 10W zugänglich ist bzw. gewartet werden kann. Insbesondere können einzelne Teile, wie der Zwischenboden 10D, über die Wartungsöffnung 10W gewartet bzw. aus der Reinigungsstation 10 herausgenommen werden, insbesondere ohne das Gehäuse 5 (vollständig) zu demontieren.

Die Wartungsöffnung 10W ist vorzugsweise zumindest im Wesentlichen rund bzw. kreisförmig ausgebildet und/oder mittels einer abnehmbaren Abdeckung verschlossen.

Die Abdeckung der Wartungsöffnung 10W ist vorzugsweise zumindest teilweise transparent ausgebildet, insbesondere derart, dass die Reinigungskammer 10A von außen ohne Öffnen der Reinigungsstation 10 einsehbar ist.

Die Reinigungsstation 10 ist insbesondere zur mechanischen und/oder chemischen Reinigung der Linse 2 ausgebildet, insbesondere mittels des Reinigungsmittels.

Vorzugsweise weist die Reinigungskammer 10A im Reinigungsbereich 10B ein Reinigungsorgan oder mehrere Reinigungsorgane, insbesondere Bürsten 10G, eine Düse oder mehrere Düsen 10H oder sonstige Mittel zur Zuführung oder Aufbringung des Reinigungsmittels und/oder ein oder mehrere Gebläse auf. Bei den Düsen 10H handelt es sich vorzugsweise um zylinder- bzw. stabförmige Düsenstöcke mit Düsenöffnungen, die quer oder radial das Reinigungsmittel abgeben bzw. versprühen.

Die Bürsten 10G sind vorzugsweise drehbar angetrieben und/oder zumindest im Wesentlichen zylinderförmig ausgebildet. Alternativ oder zusätzlich können die Bürsten 10G auch schwenkbar sein.

Vorzugsweise sind die Bürsten 10G, die Düsen 10H und/oder die Gebläse paarweise und/oder vertikal übereinander im Reinigungsbereich 10B angeordnet, insbesondere derart, dass die Fördereinrichtung 40, insbesondere das Obertrum 40H, zwischen den Bürsten 10G, den Düsen 10H und/oder den Gebläsen verläuft und/oder die Linse 2, insbesondere zusammen mit dem Träger 40C, zwischen den Bürsten 10G, den Düsen 10H und/oder den Gebläsen zum Reinigen positioniert bzw. positionierbar ist.

Besonders bevorzugt verläuft die Fördereinrichtung 40, insbesondere das Obertrum 40H, bzw. die Bewegungsbahn der Linse 2 zumindest im Wesentlichen mittig und/oder äquidistant zwischen den vorzugsweise paarweise angeordneten Bürsten 10G, Düsen 10H und/oder Gebläsen, insbesondere derart, dass die Linse 2 von beiden Seiten bzw. sowohl von unten als auch von oben gleichmäßig bzw. mit der gleichen Intensität gereinigt werden kann.

Die Bürsten 10G sind wahlweise mit gleicher Drehrichtung oder entgegengesetzter Drehrichtung betreibbar, bei entgegengesetzter Drehrichtung vorzugsweise derart, dass die Bürsten 10G an der Linse 2 entgegen der Förderrichtung X abgleiten.

Wie bereits erläutert, sind die Bürsten 10G vorzugsweise motorisch, insbesondere elektrisch, hydraulisch oder pneumatisch angetrieben, vorzugsweise mittels eines entsprechenden Bürstenantriebs 10K, wie insbesondere in Fig. 4 veranschaulicht.

Jede Bürste 10G kann mit einem eigenen Bürstenantrieb 10K versehen sein. Jedoch können auch mehrere Bürsten 10G - insbesondere zwei übereinanderliegende Bürsten 10G bzw. die Bürsten 10K einer Reinigungsstation 10 - von einem gemeinsamen Bürstenantrieb 10K angetrieben werden.

Die Drehzahl der Bürsten 10G kann gesteuert oder geregelt sein. Insbesondere kann die Drehzahl der Bürsten 10G je nach gewünschter Reinigung oder auch linsenspezifisch bedarfsweise angepasst werden.

Die Rotationsachsen der Bürsten 10G verlaufen vorzugsweise horizontal und/oder quer, insbesondere senkrecht, zu der Förderrichtung X, besonders bevorzugt in Y-Richtung.

Die Düsen 10H (Düsenstöcke) oder Gebläse (Gebläsestöcke) sind vorzugsweise länglich ausgebildet, vorzugsweise wobei sich die Längsachsen horizontal und/oder quer, insbesondere senkrecht, zu der Förderrichtung X erstrecken.

Die Bürsten 10G, Düsen 10H und/oder Gebläse erstrecken sich vorzugsweise in axialer Richtung bzw. Y-Richtung bzw. quer zur Fördereinrichtung 40 derart, dass ein oder mehrere Linsen 2 gleichzeitig gereinigt werden können.

Insbesondere erstrecken sich die Bürsten 10G, Düsen 10H und/oder Gebläse zumindest im Wesentlichen über die gesamte Breite des Obertrums 40H.

Optional kann die Orientierung der Düsen 10H und/oder der Gebläse bzw. deren Ausgaberichtung - insbesondere elektrisch oder manuell - angepasst werden. Insbesondere können die Düsen 10H und/oder Gebläse (elektrisch oder manuell) verschwenkt werden, insbesondere derart, dass die Linsen 2 und/oder Bürsten 10G optimal mit Reinigungsmittel und/oder einem Luft- bzw. Gasstrom beaufschlagt werden.

Die Düsen 10H dienen insbesondere der Zuführung des Reinigungsmittels.

Vorzugsweise sind die Düsen 10H derart ausgerichtet, dass das Reinigungsmittel auf die Bürsten 10G abgegeben wird. Es ist jedoch auch möglich, dass die Düsen 10H zusätzlich oder alternativ derart ausgerichtet sind, dass das Reinigungsmittel direkt auf die Linse 2 abgegeben wird.

Beim Darstellungsbeispiel weist die Reinigungsstation 10 vorzugsweise ein erstes Düsenpaar 10H auf, um Reinigungsmittel auf die Linse 2 aufzubringen bzw. zu sprühen, insbesondere wenn die Linse 2 in den Reinigungsbereich 10B bzw. zwischen die Bürsten 10G bewegt wird.

Ein zweites Düsenpaar 10H dient insbesondere dazu, die Bürsten 10G mit dem Reinigungsmittel zu benetzen bzw. zu besprühen, und ist beim Darstellungsbeispiel den Bürsten 10G nachgeordnet. Jedoch sind grundsätzlich auch andere Anordnungen möglich.

Alternativ oder zusätzlich ist es auch möglich, dass ein Düsenpaar 10H sowohl die Linse 2 als auch die Bürsten 10G mit Reinigungsmittel versorgt bzw. besprüht.

Das in den Reinigungsbereich 10B eingebrachte Reinigungsmittel kann durch den bzw. die Durchlässe 10E im Zwischenboden 10D nach unten in den Sammelbereich 10C ablaufen.

In dem Sammelbereich 10C wird das Reinigungsmittel gespeichert und/oder gesammelt.

Vorzugsweise weist die Reinigungsstation 10 im Sammelbereich 10C eine Heizeinrichtung 10N, einen Temperatursensor 10P und/oder mindestens einen Füllstandssensor 10Q auf (vgl. Fig. 3).

Vorzugsweise ist die Reinigungsmaschine 1 bzw. Reinigungsstation 10 dazu ausgebildet, das Reinigungsmittel im Sammelbereich 10C zu temperieren und/oder in einem bestimmten Temperaturbereich zu halten.

Insbesondere wird die Temperatur bzw. der Temperaturbereich des Reinigungsmittels im Sammelbereich 10C geregelt, insbesondere mittels des Temperatursensors 10P und der Heizeinrichtung 10N.

Darüber hinaus ist vorgesehen, dass die Reinigungsmaschine 1, insbesondere die Reinigungsstation 10, dazu ausgebildet ist, den Füllstand des Reinigungsmittels im Sammelbereich 10C zu überwachen und optional ein Nachfüllen zu steuern bzw. zu regeln, insbesondere mittels des Füllstandssensors 10Q.

Die Reinigungsmaschine 1 bzw. Reinigungsstation 10 weist vorzugsweise eine Filtereinrichtung 10R und/oder eine Pumpe 10U auf, vorzugsweise wobei die Filtereinrichtung 10R dazu ausgebildet ist, das Reinigungsmittel aufzubereiten bzw. zu filtrieren, und/oder die Pumpe 10U dazu ausgebildet ist, das Reinigungsmittel aus dem Sammelbereich 10C über die Filtereinrichtung 10R und/oder die Düsen 10H dem Reinigungsbereich 10B zuzuführen.

Wie bereits erläutert, weist die Reinigungsmaschine 1 mehrere, hier vorzugsweise mindestens drei Reinigungsstationen 10/20/30 auf. Die bisherigen Erläuterungen, insbesondere bezüglich der ersten Reinigungsstation 10 gelten grundsätzlich entsprechend für die zweite Reinigungsstation 20 und die dritte Reinigungsstation 30, auch wenn eine Wiederholung weggelassen ist. In den Figuren sind die Bezugszeichen entsprechend eingetragen, also die Komponenten und Bauteile 10A, 10B, 10C der ersten Reinigungsstation 10 finden sich als entsprechende Komponenten und Bauteile 20A, 20B, 20C bei der zweiten Reinigungsstation 20 und 30A, 30B, 30C bei der dritten Reinigungsstation 30, sodass die bisherigen Erläuterungen und Aspekte bezüglich Aufbau, Eigenschaften, etc. auch entsprechend bei der zweiten Reinigungsstation 20 und dritten Reinigungsstation 30 gelten, auch wenn eine wiederholte Beschreibung weggelassen ist.

Die erste Reinigungsstation 10 ist vorzugsweise zur mechanischen Reinigung der Linse 2 unter Zugabe des Reinigungsmittels vorgesehen, wobei das Reinigungsmittel insbesondere ein Reiniger und/oder ein Lösungsmittel enthält. Die erste Reinigungsstation 10 bildet die erste Reinigungsstufe bzw. eine Vorreinigung oder Hauptreinigung.

Die zweite Reinigungsstation 20 ist vorzugsweise zumindest im Wesentlichen baugleich zu der ersten Reinigungsstation 10 ausgeführt und/oder weist ebenfalls sowohl Bürsten 20G als auch Düsen 20H, insbesondere ein Bürstenpaar 20G und zwei Düsenpaare 20H auf.

Die zweite Reinigungsstation 20 dient insbesondere einer mechanischen Nachreinigung der Linse 2 durch Abbürsten und/oder einem (ersten) Spülen der Linse 2 durch das Reinigungsmittel, das in diesem Fall vorzugsweise zumindest im Wesentlichen nur aus gereinigtem bzw. deionisiertem bzw. vollentsalztem Wasser besteht.

Vorzugsweise dienen die erste Reinigungsstation 10 und die zweite Reinigungsstation 20 dazu, die Linse 2 mittels der Bürsten 10G/20G und der Düsen 10H/20H zu reinigen, vorzugsweise wobei die erste Reinigungsstation 10 die Linse 2 vorreinigt oder hauptreinigt und die zweite Reinigungsstation 20 die Linse 2 nachreinigt und/oder spült.

Vorzugsweise weisen die Reinigungsstationen 10 und 20 separate Kreisläufe für das jeweilige Reinigungsmittel auf.

Besonders bevorzugt sind die Reinigungskammern 10A/20A, insbesondere die erste Reinigungskammer 10A und die zweite Reinigungskammer 20A, fluidisch voneinander getrennt.

Bei der dargestellten Ausführungsform weist die Reinigungsmaschine 1 eine dritte Reinigungsstation 30 auf, vorzugsweise wobei die dritte Reinigungsstation 30 in Förderrichtung X nach der ersten Reinigungsstation 10 und/oder der zweiten Reinigungsstation 20 angeordnet ist.

Die dritte Reinigungsstation 30 ist vorzugsweise zum Abspülen oder Nachspülen und/oder Trocknen der Linse 2 ausgebildet. Zu diesem Zweck weist die dritte Reinigungsstation 30 im Reinigungsbereich 30B vorzugsweise eine oder mehrere Düsen 30H und/oder ein oder mehrere Gebläse 30J auf.

Die dritte Reinigungsstation 30 weist vorzugsweise ein Düsenpaar 30H auf, um die Linse 2 im Reinigungsbereich 30B mit dem Reinigungsmittel der dritten Reinigungsstation 30 zu besprühen bzw. abzuspülen. Die Düsenöffnungen sind dementsprechend vorzugsweise von beiden Seiten (oben und unten) auf die Linse 2 gerichtet.

Die Gebläse 30J sind vorzugsweise als zylinderförmige bzw. stabfömige Gebläsestöcke mit jeweils ein oder mehreren Gebläseöffnungen ausgebildet, um quer oder radial einen Luftstrom bzw. Gebläsestrom abzugeben und vorzugsweise auf die Linse 2 zu richten.

Beim Darstellungsbeispiel weist die dritte Reinigungsstation 30 vorzugsweise ein Gebläsepaar 30J auf, um einen Luft- bzw. Gebläsestrom von beiden Seiten (oben und unten) auf die dazwischen befindliche bzw. bewegbare Linse 2 zu richten. Jedoch sind auch andere konstruktive Lösungen möglich.

Die dritte Reinigungsstation 30 enthält bzw. verwendet vorzugsweise im Sammelbereich 30C als Reinigungsmittel deionisiertes bzw. vollentsalztes Wasser, vorzugsweise wobei das Reinigungsmittel mittels der Pumpe 30U über die Filtereinrichtung 30R zu den Düsen 30H im Reinigungsbereich 30B der dritten Reinigungsstation 30 gefördert wird.

Um eine Verunreinigung des Reinigungsmittels im Sammelbereich 30C der dritten Reinigungsstation 30 zu verhindern, ist vorzugsweise vorgesehen, dass das Reinigungsmittel nach dem Spülen bzw. Benutzen aus dem Reinigungsbereich 30B nicht mehr in dem Sammelbereich 30C der dritten Reinigungsstation 30 zurückfließen kann.Hierzu ist der Zwischenboden 30D der dritten Reinigungsstation 30 undurchlässig. Insbesondere ist der Zwischenboden 30D fest eingebaut und fluiddicht.

Vorzugsweise wird das verwendete Reinigungsmittel im Reinigungsbereich 30B der Reinigungsstation 30 auf dem Zwischenboden 30D gesammelt und der Reinigungskammer 20A bzw. dem Reinigungsbereich 20B bzw. Sammelbereich 20C der zweiten Reinigungsstation 20 zugeführt.

Vorzugsweise weist die dritte Reinigungsstation 30, insbesondere eine Trennwand 5C zwischen der dritten Reinigungsstation 30 und der zweiten Reinigungsstation 20, eine Verbindungsöffnung 30V auf, sodass das in der dritten Reinigungsstation 30 verwendete Reinigungsmittel nach der Benutzung ggf. über den Reinigungsbereich 20B bzw. Zwischenboden 20D in den Sammelbereich 20Cder benachbarten bzw. zweiten Reinigungsstation 20 gelangen bzw. abfließen kann, wie insbesondere in Fig. 3 veranschaulicht.

Der Zwischenboden 30D der dritten Reinigungsstation 30 ist vorzugsweise geneigt, insbesondere derart, dass das verwendete Reinigungsmittel über die Verbindungsöffnung 30V in die zweite Reinigungsstation 20 abfließt.

Auf die letzte Reinigungsstation, hier die dritte Reinigungsstation 30, folgt beim Darstellungsbeispiel die Entladestation 60.

Beim Darstellungsbeispiel bildet die Entladestation 60 im Bereich der Entladestelle der Fördereinrichtung 40 oder auf dem Weg dorthin vorzugsweise eine vierte Reinigungsstation, insbesondere zum Trocknen bzw. Nachtrocknen der Linse 2. Die Entladestation 60 bzw. vierte Reinigungsstation ist hierzu optional mit einem Gebläse 60F, insbesondere einem Gebläsepaar 60F versehen, das vergleichbar zu dem Gebläse 30J der dritten Reinigungsstation 30 arbeitet, sodass die diesbezüglichen Erläuterungen entsprechend oder ergänzend gelten.

Die Reinigungsstationen 10/20/30 sind vorzugsweise modulartig ausgebildet. Insbesondere kann die Reinigungsmaschine 1 sehr leicht an unterschiedliche Anforderungen angepasst bzw. umgebaut werden.

Die Reinigungsmaschine 1 kann insbesondere auch mehr oder weniger Reinigungsstationen 10 als beim Darstellungsbeispiel aufweisen bzw. bilden oder benutzen.

Insbesondere weist die Reinigungsmaschine 1 mindestens die erste Reinigungsstation 10 zum Reinigen der Linse 2 mit einem Reinigungsmittel, die zweite Reinigungsstation 20 zum Vorspülen der Linse 2 und die dritte Reinigungsstation 30 zum Klarspülen der Linse 2 auf.

Beispielsweise kann gemäß einer nicht dargestellten Ausführungsvariante der zweiten Reinigungsstation 20 zum (ersten) Spülen bzw. Vorspülen eine zusätzliche Reinigungsstation entsprechend der ersten Reinigungsstation 10 vorgeordnet sein. Die erste Reinigungsstation 10 arbeitet dann vorzugsweise mit einem ersten Reinigungsmittel und die zusätzliche Reinigungsstation arbeitet dann mit einem zweiten, anderen Reinigungsmittel.

Es ist grundsätzlich auch möglich, dass die beim Darstellungsbeispiel vorgesehenen bzw. genannten Reinigungsstationen zur Erhöhung des Durchsatzes verdoppelt werden und/oder zusätzliche Reinigungsstationen zur Trocknung zur Erhöhung der Trocknungsgüte und/oder zum Spülen zur Verringerung verbleibender Kontaminationen mit Reinigungslösungen und/oder Verunreinigungen vorgesehen werden.

Beim Darstellungsbeispiel weisen vorzugsweise die Reinigungsstationen 10/20/30 sowie optional auch die Beladestation 50 (im Bereich der Aufgabestelle auf die Fördereinrichtung 40) und/oder die Entladestation 60 (im Bereich der Entladestelle) das gemeinsame Gehäuse 5 auf.

Insbesondere kann das Gehäuse 5 das Beladen von oben ermöglichen und die Aufgabestelle seitlich und/oder unten umgeben, um beispielsweise aus der ersten Reinigungsstation 10 potentiell durch die Öffnung 5A austretendes Reinigungsmittel auffangen und ggf. wieder in den Reinigungsbereich 10B bzw. Sammelbereich 10C zurück leiten zu können.

Insbesondere kann das Gehäuse 5 das Entladen von oben ermöglichen und die Entladestelle seitlich und/oder von unten umgeben bzw. abdecken.

Die einzelnen Stationen bzw. Reinigungsbereiche sind dann vorzugsweise durch insbesondere vertikale Trennwände 5C des Gehäuses 5 voneinander getrennt, wobei die Linse 2 durch die Öffnungen 5A in gewünschter Weise mittels der Fördereinrichtung 40 in gewünschter Weise in der Förderrichtung X von einer Station zur nächsten Station gefördert werden kann.

Es ist jedoch auch möglich, dass einzelne oder alle Stationen separate Gehäuse aufweisen.

Weiter ist es auch möglich, dass die Reinigungsmaschine bzw. das Gehäuse 5 eine oder mehrere zusätzliche Reinigungsstationen aufweist, die nur bedarfsweise benutzt und/oder nur bedarfsweise mit Reinigungsorganen, wie einer Bürste, einer Düse, einem Gebläse o. dgl., ausgerüstet werden.

Wie bereits erläutert, weist die Reinigungsmaschine 1 vorzugsweise eine Entladestation 60 auf, insbesondere wobei die Entladestation 60 in Förderrichtung X (unmittelbar) nach der dritten Reinigungsstation 30 angeordnet ist.

Die Entladestation 60 ist vorzugsweise dazu ausgebildet, die (gereinigte) Linse 2 vom Träger 40C der Fördereinrichtung 40 aufzunehmen und (wieder) dem Transportband 3 bzw. einem Transportträger 6 zu übergeben.

In der Entladestation 60 bzw. Entladeposition wird zunächst die Klemmung der Linse 2 auf dem Träger 40C geöffnet. Die Reinigungsmaschine 1 bzw. Fördereinrichtung 40 bzw. Entladestation 60 weist hierzu vorzugsweise mindestens einen insbesondere pneumatisch betätigbaren Aktuator 40P auf, der die Halteeinrichtung bzw. den klemmenden Schwenkarm 40M des Trägers 40C öffnet, insbesondere gegen die Kraft einer Feder verschwenkt und so die von dem Träger 40C zunächst klemmend gehaltene Linse 2 freigibt, wie in Fig. 8A auf der rechten Seite schematisch angedeutet.

Insbesondere sind zwei Aktuatoren 40P auf gegenüberliegenden Seiten angeordnet, wie in Fig. 8A angedeutet. Die beiden Aktuatoren 40P sind vorzugsweise auf gegenüberliegenden Seiten des Obertrums 40H bzw. Gehäuses 5 im Bereich der Entladestation 60 bzw. Entladeposition angeordnet. Entsprechend sind auch zwei Aktuatoren 40P im Bereich der Aufgabestelle angeordnet.

Jedoch sind auch andere konstruktive Lösungen möglich.

Vorzugsweise weist die Entladestation 60 eine Handhabungseinrichtung 60A zur Handhabung der Linse(n) 2 auf, vorzugsweise wobei die Handhabungseinrichtung 60A eine insbesondere mechanische Greifeinrichtung 60B aufweist, um die Linse(n) 2 insbesondere randseitig zu greifen bzw. dem Träger 40C nach dem Öffnen der Klemmung zu entnehmen.

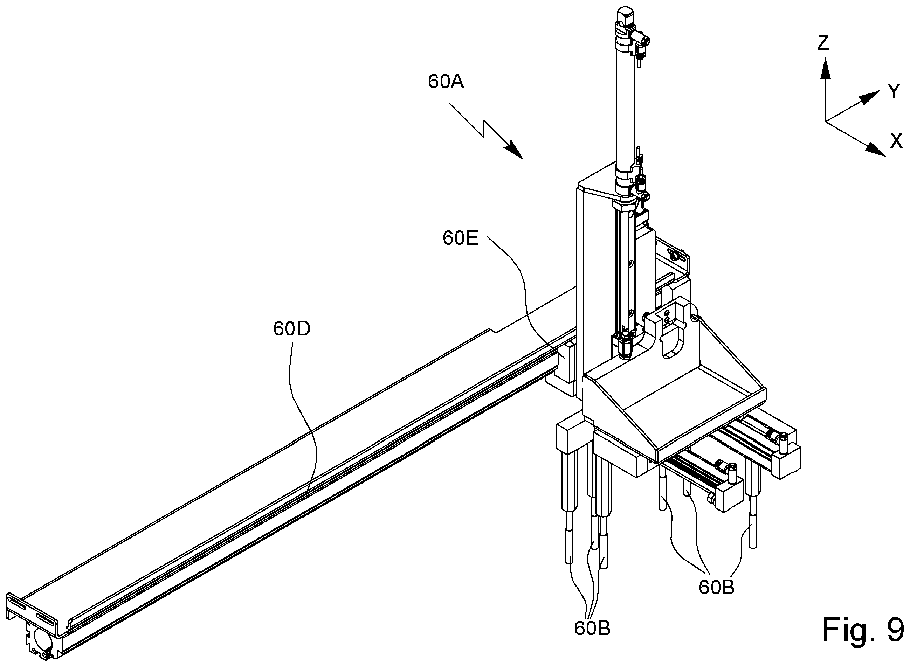

Fig. 9 zeigt eine perspektivische Ansicht der Handhabungseinrichtung 60A mit der Greifeinrichtung 60B.

Bei der dargestellten Ausführungsform weist die Greifeinrichtung 60B mindestens einen, vorzugsweise mehrere, hier zwei, Greifer - besonders bevorzugt Mehrfingergreifer - auf, insbesondere um mehrere Linsen 2 bzw. ein Linsenpaar greifen zu können.

In Fig. 9 ist der linke Greifer in einem geschlossenen Zustand und der rechte Greifer in einem geöffneten Zustand (ein Finger ist von den anderen beiden Fingern abgerückt) dargestellt.

Die Greifer greifen bzw. halten die jeweilige Linse 2 vorzugsweise umfangsseitig, um eine unerwünschte Verschmutzung der gereinigten Linse 2 zu vermeiden.

Die Handhabungseinrichtung 60A weist vorzugsweise eine Schiene 60D und/oder einen Schlitten 60E auf, vorzugsweise wobei die Greifeinrichtung 60B am Schlitten 60E befestigt ist und/oder über den Schlitten 60E entlang der Schiene 60D verschiebbar ist.

Die Schiene 60D erstreckt sich vorzugsweise quer zur Förderrichtung X und/oder in Y-Richtung und/oder von der Fördereinrichtung 40 zu dem Transportband 3.

Insbesondere ist die Handhabungseinrichtung 60A, vorzugsweise die Schiene 60D oberhalb der Fördereinrichtung 40 und/oder dem Transportband 3 angeordnet.

Die Greifeinrichtung 60B ist vorzugsweise vertikal bzw. in Z-Richtung bewegbar, insbesondere derart, dass die Linse 2 von oben aus dem Träger 40C von der Fördereinrichtung 40 gegriffen und/oder von oben dem Transportband 3 bzw. den darauf befindlichen Transportträger 6 zugeführt werden kann.

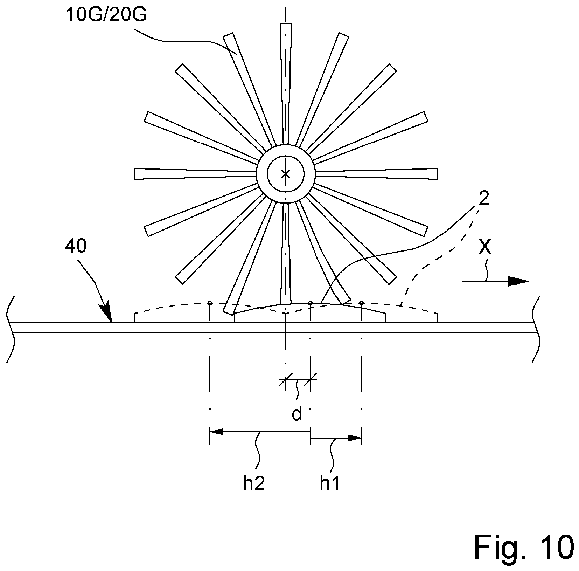

Im Folgenden wird insbesondere anhand der Fig. 10 das vorschlagsgemäße Verfahren zum Reinigen der Linse 2 näher beschrieben.

Das vorschlagsgemäße Verfahren wird vorzugsweise mittels der Reinigungsmaschine 1, insbesondere der Reinigungsstationen 10/20/30, der Fördereinrichtung 40, der Beladestation 50 und der Entladestation 60, durchgeführt.

Nachfolgend werden ein bevorzugter Reinigungsablauf und ein vorschlagsgemäßes Verfahren zum Reinigen bzw. einzelne Verfahrensschritte näher erläutert, wobei die Verfahrensschritte grundsätzlich unabhängig voneinander durchgeführt bzw. realisiert werden können.

Bei der Reinigung werden die Linsen 2 jeweils vorzugsweise paarweise manipuliert, gereinigt und dgl., also dem jeweiligen Verfahrensschritt unterworfen. Nachfolgend wird aus Vereinfachungsgründen immer nur von einer Linse 2 gesprochen. Dies ist auch möglich, da beispielsweise Linsen auch einzeln so behandelt und gereinigt werden können.

Es ist auch zu berücksichtigen, dass die Linsen 2 üblicherweise auftragsweise gehandhabt, manipuliert bzw. gereinigt werden. Wenn eine Linse 2 bzw. ein Linsenpaar einem Reinigungsschritt in einer Reinigungsstation unterworfen wird, erfolgt vorzugsweise gleichzeitig oder zeitlich überlappend ein anderer Reinigungsvorgang einer anderen Linse 2 oder Linsenpaares eines anderen Auftrags in einer anderen Reinigungsstation. Dementsprechend werden die zu reinigenden Linsen 2 unterschiedlicher Aufträge auch gleichzeitig, aber in unterschiedlichen Reinigungsstationen manipuliert bzw. gereinigt.

Vorzugsweise ist vorgesehen, die Linse 2 mit variierender Fördergeschwindigkeit und/oder getaktet durch die Reinigungsstationen 10/20/30 mittels der Fördereinrichtung 40 zu führen bzw. zu fördern, wie im Folgenden noch näher erläutert wird.

Vorzugsweise wird in einem ersten Verfahrensschritt die zu reinigende Linse 2 vom Transportband 3 bzw. Transportträger 6 genommen, insbesondere mittels der Handhabungseinrichtung 50A bzw. ersten Greifeinrichtung 50B.

Vorzugsweise wird die Greifeinrichtung 50B nach unten bzw. in Richtung des Transportbands 3 / Transportträgers 6 bzw. in Z-Richtung verfahren und die Linse 2 aufgenommen, insbesondere angesaugt.

Anschließend wird die Linse 2 bzw. die erste Greifeinrichtung 50B wieder nach oben verfahren.

Wie bereits erläutert, sind die Handhabungseinrichtung 50A, insbesondere die erste Greifeinrichtung 50B oder die zweite Greifeinrichtung 50C, und die Vorpositioniereinheit relativ zueinander bewegbar.

Vorzugsweise wird die Vorpositioniereinheit 50F nach dem Anheben der Linse 2 durch die Greifeinrichtung 50B derart unterhalb der ersten Greifeinrichtung 50B positioniert, dass die Linse 2 anschließend von oben in die Vorpositioniereinheit 50F abgelegt werden kann.

In einem weiteren bzw. zweiten Verfahrensschritt wird die Linse 2 vorzugsweise mittels der Vorpositioniereinheit 50F ausgerichtet, insbesondere entgegen der Förderrichtung X, vorzugsweise dadurch, dass die Backe 50H die Linse 2 gegen die Halterung 50G der Vorpositioniereinheit 50F bewegt. Hierbei wird die Linse 2 vorzugsweise auch in Querrichtung bzw. Y-Richtung positioniert bzw. zentriert, insbesondere aufgrund der V-Form der Backe 50H und/oder Beabstandung der die Halterung 50G bildenden Stifte.

Alternativ kann die Positionierung auch in entgegengesetzter Richtung oder quer zur X-Richtung erfolgen.

Nach erfolgter Ausrichtung der zu reinigenden Linse 2 wird die Vorpositioniereinheit 50F vorzugsweise horizontal bzw. parallel zur Förderrichtung X verfahren, insbesondere derart, dass sie im Bewegungsbereich der Greifeinrichtung 50C liegt.

In einem weiteren bzw. dritten Verfahrensschritt wird die (vorpositionierte) Linse 2 mittels der Handhabungseinrichtung 50A insbesondere der Greifeinrichtung 50C, von der Vorpositioniereinheit 50F aufgenommen und zu der Fördereinrichtung 40 gefördert, insbesondere mit gleichbleibender (horizontaler) Ausrichtung der Linse 2.

Vorzugsweise wird hierfür die zweite Greifeinrichtung 50C mittels des Schlittens 50E entlang der Schiene 50D vertikal oberhalb der Vorpositioniereinheit 50F positioniert und die zweite Greifeinrichtung 50C abgesenkt, um die (ausgerichtete) Linse 2 anzusaugen.

Anschließend wird die zweite Greifeinrichtung 50C zusammen mit der Linse 2 zu der Fördereinrichtung 40 verfahren, insbesondere mittels des Schlittens 50E bzw. entlang der Schiene 50D bzw. quer zur Förderrichtung X.

In der Aufgabeposition der Fördereinrichtung 40, die vorzugsweise von dem Gehäuse 5 oder einem sonstigen Gehäuse teilweise ummantelt und vorzugsweise nach oben offen ist, befindet sich ein Träger 40C der Fördereinrichtung 40. Dessen Halteeinrichtung bzw. Schwenkarm 40M wird in der Aufgabeposition mittels des zugeordneten Aktuators 40P geöffnet, um zur Aufnahme der Linse 2 bereit zu sein.

Sodann wird die Greifeinrichtung 50C abgesenkt bzw. vertikal nach unten verschoben und die Linse 2 auf einem Träger 40C der Fördereinrichtung 40 platziert, vorzugsweise wobei die Linse 2 dann auf dem Träger 40C klemmend befestigt wird.

Vorzugsweise wird die Linse 2 in einem weiteren bzw. vierten Verfahrensschritt der ersten Reinigungsstation 10 zugeführt, insbesondere mittels der Fördereinrichtung 40.

Vorzugsweise wird die Linse 2 bzw. der Träger 40C mit der Linse 2 von der Beladestation 50 bzw. Aufgabeposition durch die Öffnung 5A und optionale Bürstendichtung 5B - hier sogar zwei Bürstendichtungen 5B, wie in Fig. 2B angedeutet - in die erste Reinigungsstation 10 gefördert, vorzugsweise wobei die Fördergeschwindigkeit der Fördereinrichtung 40 bei Eintritt der Linse 2 in die Reinigungsstation 10 bzw. vor Beginn des Reinigungsvorgangs verringert wird.

Optional kann die Fördergeschwindigkeit der Fördereinrichtung 40 stufenlos oder stufenweise variiert werden, insbesondere wann sich die Linse 2 in einem Reinigungsbereich befindet.

Es ist vorzugsweise vorgesehen, dass die Bürsten 10G/20G, die Düsen 10H/20H/30H und/oder die Gebläse 30J/60F nicht permanent aktiviert sind, sondern lediglich für den jeweiligen Reinigungsvorgang aktiviert werden.

Vorzugsweise wird zunächst, insbesondere bei Eintritt der Linse 2 bzw. des Trägers 40C mit der Linse 2 in den Reinigungsbereich 10B der ersten Reinigungsstation 10, die Pumpe 10U aktiviert, insbesondere derart, dass die Linse 2 und/oder die Bürste(n) 10G vor Aktivierung des Bürstenantriebs 10K mit dem Reinigungsmittel benetzt wird bzw. werden.

Auf diese Weise wird verhindert, dass nicht befeuchtete Bürsten 10G und/oder eine trockene Linse 2 miteinander in Kontakt gelangen.

Fig. 10 zeigt eine schematische Ansicht der Linse 2 in einer Ausgangs- bzw. Reinigungsposition bzw. während des Reinigungsvorgangs, wobei aus Vereinfachungsgründen nur die obere Bürste 10G dargestellt ist.

Vorzugsweise wird die Fördereinrichtung 40 (kurz) angehalten, wenn die Linse 2 die Ausgangs- bzw. Reinigungsposition im Reinigungsbereich 10B erreicht.

Es ist optional vorgesehen, dass die Linse 2 horizontal versetzt zu den Bürsten 10G positioniert wird, insbesondere um einen Versatz d, besonders bevorzugt in Förderrichtung und/oder bezüglich ihres Mittelpunkts relativ zur Bürstenachse. Der Versatz d hängt insbesondere vom Linsendurchmesser und/oder von der Vorpositionierung ab.

Im Falle eines Versatzes d ist die Mitte der Linse 2 in der Ausgangs- bzw. Reinigungsposition bzw. zu Beginn des Reinigungsvorgangs dann nicht lotrecht zu den Rotationsachsen der Bürsten 10G ausgerichtet.

Vorzugsweise werden die Bürstenantriebe 10K erst aktiviert bzw. die Bürsten 10G erst in Bewegung versetzt, wenn die Ausgangs- bzw. Reinigungsposition erreicht ist.

Auf diese Weise wird der Verschleiß der Bürsten 10G reduziert, der insbesondere durch den Kontakt der Bürsten 10G mit der Kante der Linse 2 hervorgerufen wird.

Es ist bei dem vorschlagsgemäßen Verfahren vorgesehen, dass die Linse 2 während des Reinigungsvorgangs, mehrfach, insbesondere mindestens zweimal oder dreimal, hin- und herbewegt bzw. in Förderrichtung X und entgegen der Förderrichtung X bewegt wird und/oder dass die Fördereinrichtung 40, insbesondere der Kettenstrang 40A/40B bzw. das Obertrum 40H, horizontal bzw. parallel zu der Förderrichtung X die Linse 2 entsprechend bewegt bzw. oszilliert. Auf diese Weise wird eine besonders gründliche und intensive Reinigung der Linse 2 in der jeweiligen Reinigungsstation 10/20/30 ermöglicht.

Der Reinigungsvorgang bzw. die Oszillation der Linse 2 durch die Fördereinrichtung 40 dauert vorzugsweise mehr als fünf Sekunden oder zehn Sekunden, insbesondere mehr als 15 Sekunden, und/oder weniger als 60 Sekunden oder 40 Sekunden, insbesondere weniger als 25 Sekunden.

Insbesondere um die Linse 2 trotz des Versatzes d gleichmäßig zu reinigen, wird die Linse 2 ausgehend von der Ausgangs- bzw. Reinigungsposition vorzugsweise zunächst in Förderrichtung X und entgegen der Förderrichtung X unterschiedlich weit vor- und zurückbewegt.

Vorzugsweise wird die Linse 2 während des Reinigungsvorgangs zunächst in Förderrichtung X um den Vorhub h1 und entgegen die Förderrichtung X um den Rückhub h2 bewegt, vorzugsweise wobei der Vorhub h1 kleiner als der Rückhub h2 ist. Es ist jedoch auch der umgekehrte Fall möglich. Außerdem können h1 und h2 auch gleich groß sein, insbesondere wenn kein Versatz d vorhanden ist.

Vorzugsweise wird die Fördereinrichtung 40 nach Abschluss des Reinigungsvorgangs (erneut) angehalten, insbesondere derart, dass sich die Linse 2 (wieder) in der Ausgangs- bzw. Reinigungsposition befindet. Dies ist jedoch nur optional.

Anschließend werden die Bürstenantriebe 10K vorzugsweise angehalten, vorzugsweise wobei die Pumpe 10U weiterläuft bzw. erst nach Deaktivierung der Bürstenantriebe 10K deaktiviert wird.

Vorzugsweise wird die (vorgereinigte) Linse 2 anschließend bzw. nach dem (ersten) Reinigungsvorgang in einem weiteren bzw. fünften Verfahrensschritt in Förderrichtung X mittels der Fördereinrichtung 40 aus der Reinigungsstation 10 durch die weitere Öffnung 5A und optionalen Bürstendichtungen 5B gefördert und/oder der weiteren bzw. zweiten Reinigungsstation 20 zugeführt, um insbesondere einen (zweiten) Reinigungsvorgang durchzuführen und/oder die Linse 2 zu spülen.

Insbesondere entspricht der Verfahrensablauf bzw. Reinigungsablauf in der zweiten Reinigungsstation 20 dem Ablauf in der ersten Reinigungsstation 10, wobei jedoch vorzugsweise ein anderes Reinigungsmittel, insbesondere entsalztes und/oder deionisiertes Wasser, zum Spülen oder sonstigem Reinigen der Linse 2 eingesetzt wird.

Da die Fördereinrichtung 40 alle auf der Fördereinrichtung 40 befindlichen Linsen 2 in gleicher Weise bewegt, erfolgt auch eine gleichzeitige Oszillation aller Linsen 2 in den verschiedenen Reinigungsstationen, so dass diese zentrale Manipulation bzw. Steuerung auf sehr einfache Weise zu einer optimierten Reinigung in den jeweiligen Reinigungsstationen führt. Die Linse 2 wird also auch entsprechend bei der Reinigung in der zweiten Reinigungsstation 20 und auch in den weiteren Reinigungsstationen hin- und herbewegt bzw. oszilliert.

**In** einem weiteren bzw. sechsten Verfahrensschritt wird die Linse 2 bzw. der Träger 40C mit der Linse 2 mittels der Fördereinrichtung 40 durch die nächste Öffnung 5A und optionale Bürstendichtung 5B der dritten Reinigungsstation 30 zugeführt und dort vorzugsweise (nochmals) gespült und/oder getrocknet.

Es ist bevorzugt vorgesehen, dass die (gereinigte) Linse 2 in der dritten Reinigungsstation 30, insbesondere im Reinigungsbereich 30B, besonders bevorzugt unmittelbar nach Eintritt in den Reinigungsbereich 30B der dritten Reinigungsstation 30, mit Reinigungsmittel (vorzugsweise reines bzw. deionisiertes Wasser) gespült wird, vorzugsweise mittels der Düsen 30H.

Für den Spülvorgang wird die Fördergeschwindigkeit der Fördereinrichtung 40 vorzugsweise reduziert.

Wie bereits erläutert, ist vorgesehen, dass zum Spülen der Linse 2 bzw. für den Spülvorgang das Reinigungsmittel aus dem Sammelbereich 30C der dritten Reinigungsstation 30 insbesondere über die Filtereinrichtung 30R und die Düsen 30H in den Reinigungsbereich 30B gepumpt wird.

Das in dem dritten Reinigungsbereich 30B zum Spülen verwendete Reinigungsmittel wird vorzugsweise nicht wieder in den Sammelbereich 30C der dritten Reinigungsstation 30 geleitet (damit das dortige Reinigungsmittel nicht verunreinigt wird), sondern insbesondere über die Verbindungsöffnung 30V der zweiten Reinigungsstation 20 bzw. deren Sammelbereich 20C insbesondere über den Sammelbereich 20B zugeführt. Auf diese Weise wird gewährleistet, dass hochreines bzw. unverschmutztes bzw. nur unbenutztes Reinigungsmittel für den Reinigungsvorgang bzw. (letzten) Spülvorgang in der dritten Reinigungsstation 30 verwendet wird.

Außerdem kann die Ableitung des zum Spülen benutzten Reinigungsmittels aus der dritten Reinigungsstation 30 in die zweite Reinigungsstation 20 einer unerwünschten Kontamination des Reinigungsmittels der zweiten Reinigungsstation 20 durch Verschleppung von Reinigungsmittel und Verschmutzungen aus der ersten Reinigungsstation 10 in die zweite Reinigungsstation 20 entgegenwirken, zumal das aus der dritten Reinigungsstation 30 abgegebene Reinigungsmittel auch nach dem Spülen immer noch relativ rein bzw. unverschmutzt ist und idealerweise kaum Reste des Reinigungsmittels der ersten Reinigungsstation 10 enthält.

Da sich deshalb mit der Zeit der Sammelbereich 30C der dritten Reinigungsstation 30 leert und der Sammelbereich 20C der zweiten Reinigungsstation 20 füllt, weist die dritte Reinigungsstation 30 vorzugsweise einen Zufluss auf, über den (frisches) Reinigungsmittel in den Sammelbereich 30C gepumpt wird oder einströmen kann, wenn der Füllstand des Sammelbereichs 30C einen unteren Grenzwert erreicht. **In** entsprechender Weise weist der Sammelbereich 20C der zweiten Reinigungsstation 20 vorzugsweise einen Abfluss auf, über den das Reinigungsmittel abgepumpt werden oder abfließen kann, wenn der Füllstand des Sammelbereichs 20C einen oberen Grenzwert erreicht.

**In** einem weiteren bzw. siebten Verfahrensschritt wird die Linse 2 getrocknet, insbesondere mittels des Gebläses 30J, vorzugsweise wobei die Linse 2 in entsprechender Weise hin- und herbewegt bzw. oszilliert wird, wie bereits erläutert.

Auf diese Weise wird eine besonders schnelle und effiziente Trocknung der Linse 2 ermöglicht.

In einem weiteren bzw. achten Verfahrensschritt wird die (gereinigte bzw. getrocknete) Linse 2 mittels der Fördereinrichtung 40 in Förderrichtung X der Entladestation 60 zugeführt. In der Entladestation 60 bzw. in der Entladeposition, die vorzugsweise zumindest teilweise von dem Gehäuse 5 oder einem sonstigen Gehäuse ummantelt ist, kann die Linse 2 optional mittels des Gebläses 60F einem weiteren Reinigungsvorgang unterzogen werden, nämlich (zusätzlich) mittels des Gebläses 60F oder dergleichen getrocknet werden. Dieser (zusätzliche) Trocknungsschritt ist optional.

Anschließend wird der Träger 40C bzw. die Klemmung der Linse 2 auf dem Träger 40C (mittels des zugeordneten Aktuators 40P) geöffnet.

Dann kann im nächsten Schritt die Linse 2 von der Handhabungseinrichtung 60A der Entladestation 60 aufgenommen und an den Transportträger 6 auf dem Transportband 3 (wieder) übergeben werden.

Vorzugsweise wird hierzu die Handhabungseinrichtung 60A, insbesondere die Greifeinrichtung 60B, oberhalb der Linse 2 bzw. des Trägers 40C mit der Linse 2 positioniert und die Linse 2 randseitig mittels der Greifeinrichtung 60B dem Träger 40C entnommen.

Die Greifeinrichtung 60B wird vorzugsweise mittels des Schlittens 60E entlang der Schiene 60D verfahren. Wenn sich die Greifeinrichtung 60B mit der Linse 2 oberhalb des Transportbands 3 befindet, wird die Greifeinrichtung 60B vertikal verfahren bzw. in Richtung des Transportbands 3 abgesenkt und die Linse 2 an den Transportträger 6 abgegeben.

Vorzugsweise wird die Fördereinrichtung 40 für die Beladung und/oder Entladung angehalten, insbesondere derart, dass die Fördereinrichtung 40 während der Übergabe der Linse 2 vorübergehend bzw. temporär stillsteht.

Bei dem vorschlagsgemäßen Verfahren ist vorzugsweise vorgesehen, dass die Fördergeschwindigkeit der Fördereinrichtung 40 für alle Reinigungsstationen gleichzeitig verändert wird, und zwar insbesondere in Abhängigkeit von den Verfahrensschritten.

Vorzugsweise wird die Fördereinrichtung 40 zum Be- und Entladen angehalten und/oder die Fördergeschwindigkeit der Fördereinrichtung 40 für die Reinigungsvorgänge verringert bzw. reversiert (umgekehrt).

Wie bereits erläutert, ist insbesondere vorgesehen, die Förderrichtung X während der Reinigungsvorgänge zumindest temporär umzukehren und/oder die Linse 2 in den Reinigungsbereichen 10B/20B/30B/60B bzw. zwischen den Bürsten 10G/20G, den Düsen 10H/20H/30H und/oder den Gebläsen 30J/60F hin- und her zu bewegen bzw. zu oszillieren, also gleichzeitig in allen Reinigungsstationen.

Wie eingangs bereits erläutert, werden vorzugsweise mehrere Linsen 2, insbesondere mehrere Linsenpaare, gleichzeitig bzw. parallel gereinigt. So kann eine Linse 2 bzw. ein Linsenpaar in der ersten Reinigungsstation 10, eine Linse 2 bzw. ein Linsenpaar in der zweiten Reinigungsstation 20 und eine Linse 2 bzw. ein Linsenpaar in der dritten Reinigungsstation 30 sowie eine Linse 2 bzw. ein Linsenpaar in der vierten Reinigungsstation (hier Entladebereich) gleichzeitig bzw. parallel gereinigt werden, vorzugsweise wobei zeitgleich die Fördereinrichtung 40 in der Beladestation 50 mit einer weiteren Linse 2 bzw. einem weiteren Linsenpaar beladen wird und/oder eine (gereinigte bzw. getrocknete) Linse 2 bzw. ein (gereinigtes bzw. getrocknetes) Linsenpaar der Fördereinrichtung 40 in der Entladestation 60 entnommen werden kann.

Auf diese Weise ist ein besonders hoher Durchsatz, insbesondere von mehr als 100 oder 200 Gläsern pro Stunde, möglich.

### Bezugszeichenliste:

- 1: Reinigungsmaschine
- 2: Linse
- 3: Transportband
- 4: Steuereinrichtung
- 5: Gehäuse
- 5A: Öffnung
- 5B: Bürstendichtung
- 5C: Trennwand
- 6: Transportträger

- 10: erste Reinigungsstation
- 10A: Reinigungskammer
- 10B: Reinigungsbereich
- 10C: Sammelbereich
- 10D: Zwischenboden
- 10E: Durchlass
- 10F: Halterung
- 10G: Bürste
- 10H: Düse
- 10K: Bürstenantrieb
- 10N: Heizeinrichtung
- 10P: Temperatursensor
- 10Q: Füllstandssensor
- 10R: Filtereinrichtung
- 10U: Pumpe
- 10W: Wartungsöffnung

- 20: zweite Reinigungsstation
- 20A: Reinigungskammer
- 20B: Reinigungsbereich
- 20C: Sammelbereich
- 20D: Zwischenboden
- 20E: Durchlass
- 20F: Halterung
- 20G: Bürste
- 20H: Düse
- 20K: Bürstenantrieb
- 20N: Heizeinrichtung
- 20P: Temperatursensor
- 20Q: Füllstandssensor
- 20R: Filtereinrichtung
- 20S: Einlass
- 20T: Auslass
- 20U: Pumpe
- 20W: Wartungsöffnung

- 30: dritte Reinigungsstation
- 30A: Reinigungskammer
- 30B: Reinigungsbereich
- 30C: Sammelbereich
- 30D: Zwischenboden
- 30G: Bürste
- 30H: Düse
- 30J: Gebläse
- 30N: Heizeinrichtung
- 30P: Temperatursensor
- 30Q: Füllstandssensor
- 30R: Filtereinrichtung
- 30S: Einlass
- 30T: Auslass
- 30V: Verbindungsöffnung
- 30U: Pumpe
- 30W: Wartungsöffnung

- 40: Fördereinrichtung
- 40A: erster Kettenstrang
- 40B: zweiter Kettenstrang
- 40C: Träger
- 40D: Antriebsrad
- 40E: Abtriebsrad
- 40F: erstes Umlenkrad
- 40G: zweites Umlenkrad
- 40H: Obertrum
- 40J: Untertrum
- 40K: Kopplung
- 40L: Halteabschnitt
- 40M: Schwenkarm
- 40N: Haltestift
- 40P: Aktuator
- 40Q: Antrieb
- 40R: Führungsschiene

- 50: Beladestation
- 50A: Handhabungseinrichtung
- 50B: erste Greifeinrichtung
- 50C: zweite Greifeinrichtung
- 50D: Schiene
- 50E: Schlitten
- 50F: Vorpositiereinheit
- 50G: Halterung
- 50H: Backe
- 50J: Führung
- 50K: Schlittenführung

- 60: Entladestation
- 60A: Handhabungseinrichtung
- 60B: Greifeinrichtung
- 60D: Schiene
- 60E: Schlitten
- 60F: Gebläse

- X: Förderrichtung
- d: Versatz
- h1: Vorhub
- h2: Rückhub

## Patentansprüche

1. Reinigungsmaschine (1) zum Reinigen einer Linse (2),
wobei die Reinigungsmaschine (1) mindestens eine Reinigungsstation (10/20/30) aufweist,
wobei die Reinigungsmaschine (1) eine Fördereinrichtung (40) zur Förderung der Linse (2) durch die Reinigungsstation (10/20/30) in einer Förderrichtung (X) hindurch aufweist, wobei die Fördereinrichtung (40) als Endlosförderer zur Förderung durch mehrere Reinigungsstationen (10/20/30) ausgebildet ist,
**dadurch gekennzeichnet,**
**dass** die Fördereinrichtung (40) zur Hin- und Herbewegung während eines oder jedes Reinigungsvorgangs simultan in den Reinigungsstationen (10/20/30) ausgebildet ist.

2. Reinigungsmaschine nach Anspruch 1, **dadurch gekennzeichnet, dass** die Fördereinrichtung (40) zum mehrfachen und/oder horizontalen Oszillieren der Linse (2) parallel zur Förderrichtung (X) während des Reinigungsschritts und/oder zur taktweisen Förderung durch die Reinigungsstationen (10/20/30) ausgebildet ist.

3. Reinigungsmaschine nach Anspruch 1 oder 2, **dadurch gekennzeichnet, dass** die Fördereinrichtung (40) als Endlos- bzw. Linearförderer, vorzugsweise Kettenförderer, insbesondere mit mehreren Trägern (40C) für Linsen (2), ausgebildet ist.

4. Reinigungsmaschine nach einem der voranstehenden Ansprüche, **dadurch gekennzeichnet, dass** die Reinigungsmaschine (1) mehrere Reinigungsstationen (10/20/30) aufweist, vorzugsweise wobei die Reinigungsstationen (10/20/30) unmittelbar nebeneinander bzw. in der Förderrichtung (X) hintereinander anordnet sind und/oder die Fördereinrichtung (40), insbesondere ein Obertrum (40H) der Fördereinrichtung (40), horizontal durch alle Reinigungsstationen (10/20/30) hindurch verläuft.

5. Reinigungsmaschine nach Anspruch 4, **dadurch gekennzeichnet, dass** eine Reinigungsstation (30) zum Klarspülen der Linse (2) vorgesehen ist, die eine Verbindungsöffnung (30V) zu einer vorgeordneten Reinigungsstation (20) aufweist, sodass sich das Reinigungsmittel zum Klarspülen im Sammelbereich (20C) der vorgeordneten Reinigungsstation (20) sammelt.

6. Reinigungsmaschine nach einem der voranstehenden Ansprüche, **dadurch gekennzeichnet, dass** die oder jede Reinigungsstation (10/20/30) eine unterteilte Reinigungskammer (10A/20A/30A) aufweist, wobei die Reinigungskammer (10A/20A/30A) einen Reinigungsbereich (10B/20B/30B) zum Reinigen der Linse (2) mit einem Reinigungsmittel und einen Sammelbereich (10C/20C/30C), vorzugsweise ein Auffangbecken und/oder ein Reservoir für das Reinigungsmittel aufweist.

7. Reinigungsmaschine nach Anspruch 6, **dadurch gekennzeichnet, dass** die Fördereinrichtung (40), insbesondere ein Obertrum (40H) der Fördereinrichtung (40), horizontal durch den Reinigungsbereich (10B/20B/30B) hindurch verläuft und/oder dass die Fördereinrichtung (40), insbesondere ein Untertrum (40J) der Fördereinrichtung (40), unterhalb des Sammelbereichs (10C/20C/30C) und/oder außerhalb der Reinigungsstation(en) (10/20/30) verläuft.

8. Reinigungsmaschine nach Anspruch 6 oder 7, **dadurch gekennzeichnet, dass** die Reinigungsstation (10/20/30) einen Zwischenboden (10D/20D/30D) aufweist, der die Reinigungskammer (10A/20A/30A) insbesondere zumindest im Wesentlichen horizontal unterteilt bzw. den Reinigungsbereich (10B/20B/30B) von dem Sammelbereich (10C/20C/30C) trennt, vorzugsweise wobei der Zwischenboden (10D/20D) mindestens einen Durchlass (10E/20E) aufweist, über den das Reinigungsmittel in den Sammelbereich (10C/20C) strömen kann.

9. Reinigungsmaschine nach einem der voranstehenden Ansprüche, **dadurch gekennzeichnet, dass** die Reinigungsmaschine (1) eine Beladestation (50) zum Beladen der Fördereinrichtung (40) und/oder eine Entladestation (60) zum Entladen der Fördereinrichtung (40) aufweist, vorzugsweise wobei die Beladestation (50) eine Handhabungseinrichtung (50A) zur Handhabung der Linse (2) aufweist, wobei die Handhabungseinrichtung (50A) mindestens eine Greifeinrichtung (50B/50C), insbesondere mit einem Sauger, für die Linse (2) aufweist.

10. Reinigungsmaschine nach Anspruch 9, **dadurch gekennzeichnet, dass** die Reinigungsmaschine (1) bzw. die Beladestation (50) eine insbesondere verschiebbare Vorpositioniereinheit (50F) zur Ausrichtung der Linse (2) aufweist, vorzugsweise wobei die Vorpositioniereinheit (50F) eine Halterung (50G) und eine Backe (50H) aufweist, wobei die Halterung (50G) und die Backe (50H) relativ zueinander verschiebbar sind.

11. Reinigungsmaschine nach einem Anspruch 9 oder 10, **dadurch gekennzeichnet, dass** die Entladestation (60) eine Handhabungseinrichtung (60A) zur Handhabung der Linse (2) aufweist, wobei die Handhabungseinrichtung (60A) eine Greifeinrichtung (60B), insbesondere mit einem Mehrfingergreifer, für die Linse (2) aufweist.

12. Verfahren zur Reinigung einer Linse (2) mittels einer insbesondere nach einem der voranstehenden Ansprüche ausgebildeten Reinigungsmaschine (1) mit mindestens einer Reinigungsstation (10/20/30) und einer Fördereinrichtung (40) zur Förderung der Linse (2),
wobei die Linse (2) mittels der Fördereinrichtung (40) in einer Förderrichtung (X) durch die Reinigungsstation (10/20/30) hindurch gefördert wird, und
wobei in der Reinigungsstation (10/20/30) ein Reinigungsvorgang durchgeführt wird,
**dadurch gekennzeichnet,**
**dass** die Linse (2) während des Reinigungsvorgangs durch die Fördereinrichtung (40) hin- und herbewegt wird.

13. Verfahren nach Anspruch 12, **dadurch gekennzeichnet, dass** die Linse (2) mittels der Fördereinrichtung (40) während des Reinigungsvorgangs der Linse (2) horizontal bzw. parallel zu der Förderrichtung (X) oszilliert.

14. Verfahren nach Anspruch 12 oder 13, **dadurch gekennzeichnet, dass** die Fördereinrichtung (40) die Linse (2) nacheinander durch mehrere Reinigungsstationen (10/20/30) - insbesondere linear in der Förderrichtung (X) - fördert und während des Reinigungsvorgangs gleichzeitig in den Reinigungsstationen (10/20/30) - insbesondere parallel zu der Förderrichtung (X) - oszilliert.

15. Verfahren nach einem der Ansprüche 12 bis 14, **dadurch gekennzeichnet, dass** die Linse (2) der Fördereinrichtung (40), insbesondere einem Träger (40C) der Fördereinrichtung (40), übergeben wird, wobei die Fördereinrichtung (40) bei Übergabe der Linse (2) stillsteht, und/oder
dass die Linse (2) nach der Reinigung einem Transportband (3) oder Transportträger (6) übergeben wird, wobei die Fördereinrichtung (40) bei Übergabe der Linse (2) stillsteht.

## Claims

1. Cleaning machine (1) for cleaning a lens (2),
wherein the cleaning machine (1) has at least one cleaning station (10/20/30),
wherein the cleaning machine (1) has a conveying device (40) for conveying the lens (2) through the cleaning station (10/20/30) in a conveying direction (X), wherein the conveying device (40) is designed as an endless conveyor for conveying through a plurality of cleaning stations (10/20/30),
**characterized**
**in that** the conveying device (40) is designed for moving back and forth during one or each cleaning process simultaneously in the cleaning stations (10/20/30).

2. Cleaning machine according to claim 1, **characterized in that** the conveying device (40) is designed for multiple and/or horizontal oscillation of the lens (2) parallel to the conveying direction (X) during the cleaning step and/or for clocked conveying through the cleaning stations (10/20/30).

3. Cleaning machine according to claim 1 or 2, **characterized in that** the conveying device (40) is designed as an endless and/or linear conveyor, preferably a chain conveyor, in particular with several carriers (40C) for lenses (2).

4. Cleaning machine according to one of the preceding claims, **characterized in that** the cleaning machine (1) has a plurality of cleaning stations (10/20/30), preferably wherein the cleaning stations (10/20/30) are arranged directly next to one another and/or one behind the other in the conveying direction (X) and/or the conveying device (40), in particular an upper run (40H) of the conveying device (40), runs horizontally through all the cleaning stations (10/20/30).

5. Cleaning machine according to claim 4, **characterized in that** a cleaning station (30) for rinsing the lens (2) is provided, which has a connecting opening (30V) to an upstream cleaning station (20), so that the cleaning agent for rinsing collects in the collecting area (20C) of the upstream cleaning station (20).

6. Cleaning machine according to one of the preceding claims, **characterized in that** the or each cleaning station (10/20/30) has a subdivided cleaning chamber (10A/20A/30A), the cleaning chamber (10A/20A/30A) comprising a cleaning area (10B/20B/30B) for cleaning the lens (2) with a cleaning agent and a collecting area (10C/20C/30C), preferably a catch basin and/or a reservoir for the cleaning agent.

7. Cleaning machine according to claim 6, **characterized in that** the conveying device (40), in particular an upper run (40H) of the conveying device (40), runs horizontally through the cleaning area (10B/20B/30B) and/or that the conveying device (40), in particular a lower run (40J) of the conveying device (40), runs below the collecting area (10C/20C/30C) and/or outside the cleaning station(s) (10/20/30).

8. Cleaning machine according to claim 6 or 7, **characterized in that** the cleaning station (10/20/30) comprises an intermediate floor (10D/20D/30D) which divides the cleaning chamber (10A/20A/30A), in particular at least substantially horizontally, and/or separates the cleaning area (10B/20B/30B) from the collecting area (10C/20C/30C), preferably wherein the intermediate floor (10D/20D) comprises at least one passage (10E/20E) through which the cleaning agent can flow into the collecting area (10C/20C).

9. Cleaning machine according to one of the preceding claims, **characterized in that** the cleaning machine (1) comprises a loading station (50) for loading the conveying device (40) and/or an unloading station (60) for unloading the conveying device (40), preferably wherein the loading station (50) has a handling device (50A) for handling the lens (2), the handling device (50A) having at least one gripping device (50B/50C), in particular with a suction cup, for the lens (2).

10. Cleaning machine according to claim 9, **characterized in that** the cleaning machine (1) or the loading station (50) comprises an in particular displaceable prepositioning unit (50F) for aligning the lens (2), preferably wherein the prepositioning unit (50F) comprises a holder (50G) and a jaw (50H), wherein the holder (50G) and the jaw (50H) are displaceable relative to each other.

11. Cleaning machine according to claim 9 or 10, **characterized in that** the unloading station (60) has a handling device (60A) for handling the lens (2), the handling device (60A) having a gripping device (60B), in particular with a multi-finger gripper, for the lens (2).

12. Method for cleaning a lens (2) by means of a cleaning machine (1), in particular designed according to one of the preceding claims, with at least one cleaning station (10/20/30) and a conveying device (40) for conveying the lens (2),
wherein the lens (2) is conveyed through the cleaning station (10/20/30) by means of the conveying device (40) in a conveying direction (X), and
wherein a cleaning process is carried out in the cleaning station (10/20/30),
**characterized**
**in that** the lens (2) is moved back and forth during the cleaning process by means of the conveying device (40).

13. Method according to claim 12, **characterized in that** the lens (2) oscillates horizontally and/or parallel to the conveying direction (X) by means of the conveying device (40) during the cleaning process of the lens (2).

14. Method according to claim 12 or 13, **characterized in that** the conveying device (40) conveys the lens (2) successively through a plurality of cleaning stations (10/20/30) - in particular linearly in the conveying direction (X) - and oscillates simultaneously in the cleaning stations (10/20/30) - in particular parallel to the conveying direction (X) - during the cleaning process.

15. Method according to one of claims 12 to 14, **characterized in that** the lens (2) is transferred to the conveying device (40), in particular to a carrier (40C) of the conveying device (40), the conveying device (40) being stationary when the lens (2) is transferred, and/or
**in that** the lens (2) is transferred to a transport belt (3) or transport carrier (6) after cleaning, the conveying device (40) being stationary when the lens (2) is transferred.

## Revendications

1. Machine de nettoyage (1) pour le nettoyage d'une lentille (2),
la machine de nettoyage (1) présentant au moins un poste de nettoyage (10/20/30),
la machine de nettoyage (1) présentant un dispositif de transport (40) pour le transport de la lentille (2) à travers le poste de nettoyage (10/20/30) dans une direction de transport (X), le dispositif de transport (40) étant réalisé sous forme de transporteur sans fin pour le transport à travers plusieurs postes de nettoyage (10/20/30),
**caractérisée**
**en ce que** le dispositif de transport (40) est réalisé pour effectuer un mouvement de va-et-vient pendant une ou chaque opération de nettoyage simultanément dans les postes de nettoyage (10/20/30).

2. Machine de nettoyage selon la revendication 1, **caractérisée en ce que** le dispositif de transport (40) est réalisé pour faire osciller la lentille (2) plusieurs fois et/ou horizontalement parallèlement à la direction de transport (X) pendant l'étape de nettoyage et/ou pour la transporter de manière cadencée à travers les postes de nettoyage (10/20/30).

3. Machine de nettoyage selon la revendication 1 ou 2, **caractérisée en ce que** le dispositif de transport (40) est réalisé sous forme de transporteur sans fin et/ou linéaire, de préférence de transporteur à chaîne, en particulier avec plusieurs supports (40C) pour des lentilles (2).

4. Machine de nettoyage selon l'une quelconque des revendications précédentes, **caractérisée en ce que** la machine de nettoyage (1) présente plusieurs postes de nettoyage (10/20/30), les postes de nettoyage (10/20/30) étant de préférence disposés directement les uns à côté des autres et/ou les uns derrière les autres dans la direction de transport (X) et/ou le dispositif de transport (40), en particulier un brin supérieur (40H) du dispositif de transport (40), s'étendant horizontalement à travers tous les postes de nettoyage (10/20/30).

5. Machine de nettoyage selon la revendication 4, **caractérisée en ce qu'**un poste de nettoyage (30) est prévu pour le rinçage de la lentille (2), lequel présente une ouverture de raccordement (30V) à un poste de nettoyage (20) en amont, de sorte que l'agent de nettoyage pour le rinçage s'accumule dans la région de collecte (20C) du poste de nettoyage (20) en amont.

6. Machine de nettoyage selon l'une quelconque des revendications précédentes, **caractérisée en ce que** le ou chaque poste de nettoyage (10/20/30) présente une chambre de nettoyage (10A/20A/30A) divisée, la chambre de nettoyage (10A/20A/30A) présentant une région de nettoyage (10B/20B/30B) pour le nettoyage de la lentille (2) avec un agent de nettoyage et une région de collecte (10C/20C/30C), de préférence un bassin de collecte et/ou un réservoir pour l'agent de nettoyage.

7. Machine de nettoyage selon la revendication 6, **caractérisée en ce que** le dispositif de transport (40), en particulier un brin supérieur (40H) du dispositif de transport (40), s'étend horizontalement à travers la région de nettoyage (10B/20B/30B) et/ou **en ce que** le dispositif de transport (40), en particulier un brin inférieur (40J) du dispositif de transport (40), s'étend en dessous de la région de collecte (10C/20C/30C) et/ou à l'extérieur du ou des postes de nettoyage (10/20/30).

8. Machine de nettoyage selon la revendication 6 ou 7, **caractérisée en ce que** le poste de nettoyage (10/20/30) présente un fond intermédiaire (10D/20D/30D) qui divise la chambre de nettoyage (10A/20A/30A), en particulier au moins sensiblement horizontalement, et/ou sépare la région de nettoyage (10B/20B/30B) de la région de collecte (10C/20C/30C), le fond intermédiaire (10D/20D) présentant de préférence au moins un passage (10E/20E) par le biais duquel l'agent de nettoyage peut s'écouler dans la région de collecte (10C/20C).

9. Machine de nettoyage selon l'une quelconque des revendications précédentes, **caractérisée en ce que** la machine de nettoyage (1) présente un poste de chargement (50) pour le chargement du dispositif de transport (40) et/ou un poste de déchargement (60) pour le déchargement du dispositif de transport (40), le poste de chargement (50) présentant de préférence un dispositif de manipulation (50A) pour la manipulation de la lentille (2), le dispositif de manipulation (50A) présentant au moins un dispositif de préhension (50B/50C), en particulier avec un dispositif d'aspiration, pour la lentille (2).

10. Machine de nettoyage selon la revendication 9, **caractérisée en ce que** la machine de nettoyage (1) ou le poste de chargement (50) présente une unité de prépositionnement (50F), en particulier déplaçable, pour l'orientation de la lentille (2), l'unité de prépositionnement (50F) présentant de préférence un support (50G) et une mâchoire (50H), le support (50G) et la mâchoire (50H) étant déplaçables l'un par rapport à l'autre.

11. Machine de nettoyage selon la revendication 9 ou 10, **caractérisée en ce que** le poste de déchargement (60) présente un dispositif de manipulation (60A) pour la manipulation de la lentille (2), le dispositif de manipulation (60A) présentant un dispositif de préhension (60B), en particulier avec une pince à plusieurs doigts, pour la lentille (2).

12. Procédé de nettoyage d'une lentille (2) au moyen d'une machine de nettoyage (1), réalisée en particulier selon l'une quelconque des revendications précédentes, présentant au moins un poste de nettoyage (10/20/30) et un dispositif de transport (40) pour le transport de la lentille (2),
la lentille (2) étant transportée au moyen du dispositif de transport (40) dans une direction de transport (X) à travers le poste de nettoyage (10/20/30), et
une opération de nettoyage étant effectuée dans le poste de nettoyage (10/20/30), **caractérisé**
**en ce que** la lentille (2) est déplacée en va-et-vient par le dispositif de transport (40) pendant l'opération de nettoyage.

13. Procédé selon la revendication 12, **caractérisé en ce que** la lentille (2) oscille horizontalement et/ou parallèlement à la direction de transport (X) au moyen du dispositif de transport (40) pendant l'opération de nettoyage de la lentille (2).

14. Procédé selon la revendication 12 ou 13, **caractérisé en ce que** le dispositif de transport (40) transporte la lentille (2) successivement à travers plusieurs postes de nettoyage (10/20/30) - en particulier linéairement dans la direction de transport (X) - et oscille simultanément dans les postes de nettoyage (10/20/30) pendant l'opération de nettoyage - en particulier parallèlement à la direction de transport (X).

15. Procédé selon l'une quelconque des revendications 12 à 14, **caractérisé en ce que** la lentille (2) est transférée au dispositif de transport (40), en particulier à un support (40C) du dispositif de transport (40), le dispositif de transport (40) étant à l'arrêt lors du transfert de la lentille (2), et/ou
**en ce que** la lentille (2) est transférée à une bande de transport (3) ou un support de transport (6) après le nettoyage, le dispositif de transport (40) étant à l'arrêt lors du transfert de la lentille (2).
